# EUROPEAN PATENT SPECIFICATION

(11) **EP 3 668 317 B1**
(45) Date of publication and mention of the grant of the patent: **19.02.2025**
(21) Application number: 18845902.8
(22) Date of filing: 16.08.2018
(51) Int. Cl.: A01N 37/44, A01N 43/16, A01N 43/64, A01N 59/06, A01N 59/16, A01N 59/20, A01P 3/00

(54) **PHOTODYNAMIC INHIBITION OF MICROBIAL PATHOGENS IN PLANTS**
PHOTODYNAMISCHE HEMMUNG VON MIKROBIELLEN PATHOGENEN IN PFLANZEN
INHIBITION PHOTODYNAMIQUE D'AGENTS PATHOGÈNES MICROBIENS DANS DES PLANTES

(30) Priority: 16.08.2017 US 201762546221 P
(43) Date of publication of application: 24.06.2020
(73) Proprietor: NUTRIEN AG SOLUTIONS (CANADA) INC., Calgary AB T2J 7E8 (CA)
(72) Inventor: FEFER, Michael, Mississauga, Ontario L5K 1A8 (CA); PLAETZER, Kristjan, A-5023 Salzburg (AT); LIU, Jun, Mississauga, Ontario L5K 1A8 (CA); NASH, Brady, Mississauga, Ontario L5K 1A8 (CA); NG, Kenneth Ka-Seng, Mississauga, Ontario L5K 1A8 (CA); TERAZONO, Yuichi, Mississauga, Ontario L5K 1A8 (CA); GLUECK, Michael Johannes, D-83317 Teisendorf (DE)
(74) Representative: Peterreins Schley
(86) International application number: PCT/CA2018/050997
(87) International publication number: WO 2019/033216

(56) References cited:
- WO-A1-2010/014728
- SZULBINSKI WITOLD ET AL: "Photoinduced Reduction of Water by Tin(IV) and Ruthenium(II) Porphyrins", INORGANICA CHIMICA ACTA, 1 January 1986 (1986-01-01), pages 91 - 97, XP055793440, Retrieved from the Internet <URL:http://nathan.instras.com/MyDocsDB/doc-608.pdf> [retrieved on 20210408]
- SZULBINSKI W ET AL: "Electrochemical and photocatalytic properties of water-soluble tin(iv) meso-tetraanilinporphyrin", JOURNAL OF ELECTROANALYTICAL CHEMISTRY AND INTERFACIAL ELECTROCHEMISTRY, ELSEVIER, AMSTERDAM, NL, vol. 226, no. 1-2, 10 July 1987 (1987-07-10), pages 157 - 170, XP026533394, ISSN: 0022-0728, [retrieved on 19870710], DOI: 10.1016/0022-0728(87)80041-4
- VANDRESEN CAMILA CHEVONICA ET AL: "In vitro photodynamic inactivation of conidia of the phytopathogenic fungus Colletotrichum graminicola with cationic porphyrins", PHOTOCHEMICAL AND PHOTOBIOLOGICAL SCIENCES, vol. 15, no. 5, 1 January 2016 (2016-01-01), GB, pages 673 - 681, XP055793523, ISSN: 1474-905X, Retrieved from the Internet <URL:https://pubs.rsc.org/en/content/articlepdf/2016/pp/c5pp00372e> DOI: 10.1039/C5PP00372E
- GOMES MARIA C. ET AL: "Photodynamic inactivation of Penicillium chrysogenum conidia by cationic porphyrins", PHOTOCHEMICAL AND PHOTOBIOLOGICAL SCIENCES, vol. 10, no. 11, 1 January 2011 (2011-01-01), GB, pages 1735, XP055793536, ISSN: 1474-905X, Retrieved from the Internet <URL:https://pubs.rsc.org/en/content/articlelanding/2011/pp/c1pp05174a/unauth#|divAbstract> DOI: 10.1039/c1pp05174a
- STEPHEN O DUKE ET AL: "Photosensitizing porphyrins as herbicides", ACS SYMPOSIUM SERIES, AMERICAN CHEMICAL SOCIETY/OXFORD UNIVERSITY PRESS, US, vol. 449, 1 January 1994 (1994-01-01), pages 371 - 386, XP008126340, ISSN: 0097-6156

## Description

### TECHNICAL FIELD

The technical field generally relates to photodynamic inhibition of microbial pathogens in plants using compounds and compositions that include a photosensitizer compound. More particularly, the technical field relates to nitrogen-bearing macrocyclic compounds and compositions thereof for photodynamic inhibition of microbial pathogens, such as fungal or bacterial pathogens, in plants. The nitrogen-bearing macrocyclic compounds can be porphyrin compounds, or reduced porphyrin compounds.

### BACKGROUND

Photodynamic inhibition of microbial pathogens involves exposing a photosensitive agent to light in order to generation reactive oxygen species (ROS), such as singlet oxygen, which can have detrimental effects on the microbial pathogens. Existing photodynamic inhibition techniques and applications have various shortcomings.

Szulbinski Witold et al. "Photoinduced Reduction of Water by Tin (IV) and Ruthenium(II) Porphyrins", Inorganica Chimica Acta, 1 January 1986, pages 91 to 97, relates to photoredox systems for the reduction of water in which watersoluble Sn(IV) and Ru(ll) porphyrins have been used as photosensitizers.

Szulbinski Witold et al. "Electrochemical and photocatalytic properties of water-soluble tin(iv) meso-tetraanilinporphyrin", Journal of Electroanalytical Chemistry and Interfacial Electrochemistry, Elsevier, vol. 226, no. 1-2, 10 July 1987, pages 157-170 relates to a three-stage irreversible electroreduction and a two-stage irreversible electrooxidation of tin(IV) meso-tetraanilinporphyrin in aqueous solution.

Vandresen Camila Chevonica et al. "In vitro photodynamic inactivation of conidia of the phytopathogenic fungus Colletotrichum graminicola with cationic porphyrins", Photochemical and Photobiological Scienes, vol. 15, no. 5, 1 January 2016, pages 673-681 relates to photoinactivating properties of five cationic meso-(1-methyl-4-pyridinio)porphyrins on conidia of the phytopathogen Colletotrichum graminicola.

Gomes Maria C. et al. "Photodynamic inactivation of Penicillium chrysogenum conidia by cationic porphyrins", Photochemical and Photobiological Scienes , vol. 10, no. 11, 1 January 2011, page 1735 relates to the photophysical and biological evaluation of five cationic porphyrins as photosensitizers (PS) for the photodynamic inactivation (PDI) of Penicillium chrysogenum conidia.

O Duke Stephen et al. "Photosensitizing porphyrins as herbicides", ACS Symposium Series, American Chemical Society/Oxford University Press, US, vol. 449, 1 January 1994, pages 371-386, relates to accumulation of porphyrins due to plant treatment with compounds that effect the heme and/or chlorophyll biosynthesis pathways.

### SUMMARY

Various compositions and methods are described herein for photodynamic inhibition of microbial pathogens on plants. Photodynamic inhibition of bacterial or fungal pathogens can be performed by applying to the plant a photosensitizer compound and an enhancer compound, which may be a chelating agent. The photosensitizer compound and the chelating agent can be combined along with other optional components, such as delivery fluids, solvents, surfactants and stickers to form an anti-microbial composition for application to plants. Photodynamic inhibition of microbial pathogens on plants can be ameliorated by the combination of the photosensitizer compound and an enhancer compound, compared to each compound taken alone. Non-limiting examples of enhancer compounds can for example include ethylenediaminetetraacetic acid (EDTA), polyaspartic acid, ethylenediamine-N,N'-disuccinic acid (EDDS), iminodisuccinic acid (IDS, also called (N-1,2-dicarboxyethyl)-D,L-aspartic acid), N,N-dicarboxymethyl glutamic acid (GLDA), or agriculturally acceptable salts thereof.

In one aspect, there is provided a method for inhibiting growth of a microbial pathogen of a plant, including: applying to the plant a combination including: a nitrogen-bearing macrocyclic compound which is a singlet oxygen photosensitizer selected from the group consisting of a porphyrin, a reduced porphyrin and a mixture thereof; and a chelating agent to increase permeability of the microbial pathogen to the nitrogen-bearing macrocyclic compound, wherein the chelating agent is an aminopolycarboxylic acid or an agriculturally acceptable salt thereof; and exposing the plant to light to activate the nitrogen-bearing macrocyclic compound and generate reactive singlet oxygen species.

In another aspect, there is provided a use of a composition for inhibiting growth of a microbial pathogen of a plant, including: a nitrogen-bearing macrocyclic compound which is a singlet oxygen photosensitizer selected from the group consisting of a porphyrin, a reduced porphyrin and a mixture thereof; a chelating agent to increase permeability of the microbial pathogen to the nitrogen-bearing macrocyclic compound, wherein the chelating agent is an aminopolycarboxylic acid or an agriculturally acceptable salt thereof; and a carrier fluid, wherein upon applying the composition to the plant and exposing the plant to light, the nitrogen-bearing macrocyclic compound is activated and generates reactive singlet oxygen species.

In another aspect, there is provided a method for inhibiting growth of a fungal pathogen of a plant. This method is not part of the claimed invention. The method includes: applying to the plant a nitrogen-bearing macrocyclic compound which is a singlet oxygen photosensitizer selected from the group consisting of a porphyrin, a reduced porphyrin and a mixture thereof; and exposing the plant to light to activate the nitrogen-bearing macrocyclic compound and generate reactive singlet oxygen species.

In another aspect, there is provided a method for inhibiting growth of a microbial pathogen of a plant. This method is not part of the claimed invention. The method includes: applying to the plant a combination including: a photosensitive diarylheptanoid compound that is a singlet oxygen photosensitizer; and a chelating agent to increase permeability of the microbial pathogen to the photosensitive diarylheptanoid compound; and exposing the plant to light to activate the photosensitive diarylheptanoid compound and generate reactive singlet oxygen.

According to the claimed invention, the photosensitizer compound is a nitrogen-bearing macrocyclic compound, selected from the group consisting of a porphyrin or a reduced porphyrin compound, which can be metallated or non-metallated. Metallated photosensitive compounds, such as Mg-chlorophyllin, are provided so as to generate, in response to light exposure, reactive oxygen species (ROS) available to inhibit microbial growth. The photosensitizer compound can include other compounds, such as diarylheptanoid compounds.

In addition, photodynamic inhibition of fungal pathogens can be performed by applying a porphyrin or reduced porphyrin photosensitizer compound to the plant and exposing the plant to light to activate the photosensitizer compound and generate reactive oxygen species (ROS) available to inhibit fungal growth.

Plants infected with various microbial pathogens can be treated. Fungal pathogens to which the anti-microbial compositions can be applied include *Alternaria solani, Botrytis cinerea, Sclerotinia homoeocarpa,* and many others. Bacterial pathogens to which the anti-microbial composition can be applied include gram-negative bacteria, such as *Erwinia amylovara,* and others.

The present description provides methods for photodynamically inhibiting anti-microbial growth, such as fungal growth and/or bacterial pathogen growth on a plant. The methods can include applying to the plant: a porphyrin or reduced porphyrin photosensitizer compound; and at least one of ethylenediaminetetraacetic acid (EDTA) or an agriculturally acceptable salt thereof, polyaspartic acid or an agriculturally acceptable salt thereof, ethylenediamine-N,N'-disuccinic acid (EDDS) or an agriculturally acceptable salt thereof, iminodisuccinic acid (IDS) or an agriculturally acceptable salt thereof, and L-glutamic acid N,N-diacetic acid (GLDA) or an agriculturally acceptable salt thereof; and exposing the plant to light to activate the porphyrin or reduced porphyrin photosensitizer compound.

Anti-microbial compositions, such as anti-fungal and/or anti-bacterial compositions for use on plants are also provided. In some embodiments, the compositions can include a porphyrin or reduced porphyrin photosensitizer compound; and at least one of ethylenediaminetetraacetic acid (EDTA) or an agriculturally acceptable salt thereof, polyaspartic acid or an agriculturally acceptable salt thereof, ethylenediamine-N,N'-disuccinic acid (EDDS) or an agriculturally acceptable salt thereof, iminodisuccinic acid (IDS) or an agriculturally acceptable salt thereof, and L-glutamic acid N,N-diacetic acid (GLDA) or an agriculturally acceptable salt thereof. In some embodiments, the composition can include a photosensitive nitrogen-bearing macrocyclic compound and an enhancer. In some embodiments, the composition can include a porphyrin or reduced porphyrin photosensitizer compound that, in response to light exposure, generates reactive oxygen species (ROS) available to inhibit fungal growth. In some embodiments, the composition can include photosensitive curcumin compound and a chelating agent, for photodynamic inhibition of microbial pathogens on plants.

Also described herein are the use of a porphyrin or reduced porphyrin photosensitizer compound in combination with at least one of ethylenediaminetetraacetic acid (EDTA) or an agriculturally acceptable salt thereof, polyaspartic acid or an agriculturally acceptable salt thereof, ethylenediamine-N,N'-disuccinic acid (EDDS) or an agriculturally acceptable salt thereof, iminodisuccinic acid (IDS) or an agriculturally acceptable salt thereof, and L-glutamic acid N,N-diacetic acid (GLDA) or an agriculturally acceptable salt thereof, for photodynamic inhibition of microbial pathogens, such as photodynamic inhibition of a fungal pathogen and/or photodynamic inhibition of a bacterial pathogen on plants.

In one aspect, a method for photodynamically inhibiting fungal growth on a plant can include applying a photosensitive nitrogen-bearing macrocyclic compound and an enhancer compound to the plant. This method is not according to the invention. The method further includes exposing the plant to light to activate the photosensitive nitrogen-bearing macrocyclic compound and generate reactive oxygen species (ROS); wherein the enhancer compound is provided in an amount sufficient to increase fungal inhibition compared to the photosensitive nitrogen-bearing macrocyclic compound alone.

In another aspect, a method for photodynamically inhibiting microbial pathogen growth on a plant can include applying a photosensitizer compound and a chelating agent to the plant. This method is not part of the claimed invention. The method further includes exposing the plant to light to activate the photosensitizer compound and generate reactive oxygen species (ROS); wherein the chelating agent is provided in an amount sufficient to increase microbial inhibition compared to the photosensitizer compound alone.

In yet another aspect, a method for photodynamically inhibiting fungal growth on a plant can include applying a porphyrin or reduced porphyrin photosensitizer compound to the plant. The method is not part of the claimed invention. The method further includes exposing the plant to light to activate the photosensitizer compound and generate reactive oxygen species (ROS) available to inhibit fungal growth.

A method for photodynamically inhibiting fungal growth of a fungal pathogen of genera *Botrytis, Alternaria* or *Sclerotinia* on a plant is also provided. The method is not part of the claimed invention. The method can include: applying a photosensitizer compound to the plant; and exposing the plant to light to activate the photosensitizer compound and generate reactive oxygen species (ROS) that inhibit fungal activity.

In yet another aspect, a method for photodynamically inhibiting microbial pathogen growth on a plant is provided. This method is not part of the claimed invention. The method can include applying a photosensitizer compound and a chelating agent to the plant, the photosensitizer compound including a diarylheptanoid compound; and exposing the plant to light to activate the photosensitizer compound and generate reactive oxygen species (ROS); wherein the chelating agent is provided in an amount sufficient to increase microbial inhibition compared to the photosensitizer compound alone.

Photodynamic inhibition techniques can be used for various types of plants that may be affected by microbial pathogens. For example, crop plants, lawn plants, trees and other plants infected with microbial pathogens can be treated.

### DETAILED DESCRIPTION

Some microbial pathogens, such as Gram-negative bacteria and certain types of fungi have a cellular membrane that is difficult to penetrate. More specifically, these microbial pathogens sometimes have an impermeable outer cell membrane that contains endotoxins and can block small molecules such as antibiotics, dyes and detergents, thereby protecting the sensitive inner membrane and cell wall. It can therefore be challenging to use photodynamic therapy to inhibit growth of certain microbial pathogens in plants because the photosensitizer compounds tend to not achieve good penetration inside the cell wall.

Photodynamic inhibition of microbial pathogens that are present on plants can be achieved by applying a photosensitizer compound and an enhancer compound. The photosensitizer compound reacts to light by generating reactive oxygen species (ROS), while the enhancer compound increases the overall impact of suppression of the growth of the microbial pathogens, for example by increasing the permeability of the outer membrane of the microbial pathogens to the photosensitizer compound.

In an implementation according to the claims, the photosensitizer compound is a porphyrin or a reduced porphyrin compound, such as a chlorin compound, and the enhancer is a chelating agent comprising an aminopolycarboxylic acid. An exemplary porphyrin compound is Mg-chlorophyllin, an exemplary chlorin compound is chlorin e6, and an exemplary chelating agent is ethylenediaminetetraacetic acid (EDTA) or agriculturally acceptable salts thereof.

In some scenarios, the combined use of a photosensitizer compound and a chelating agent have been found to provide enhanced suppression of microbial pathogen growth after photodynamic treatment compared to each used individually. More details regarding the photosensitizer compounds, chelating agents and other additives are provided in the present description.

It should be understood that when a combination of photosensitizer compound, a chelating agent and any other optional other additives or adjuvants is described throughout the present description and claims, an agriculturally effective amount of each one of the components of the combination can be used so as to provide the anti-microbial activity while being minimally or non-phytotoxic to the host plant.

### Photosensitizer compounds

As discussed above, photosensitizer compounds can be used to enable photodynamic inhibition of microbial pathogens that are present on plants. The photosensitizer compounds react to light by generating reactive oxygen species (ROS).

Depending on the type of ROS generated, photosensitizers can be classified into two classes, namely Type I photosensitizers and Type II photosensitizers. On the one hand, Type I photosensitizers form short lived free radicals through electron abstraction or transfer from a substrate when excited at an appropriate wavelength in the presence of oxygen. On the other hand, Type II photosensitizers form a highly reactive oxygen state known as "singlet oxygen", also referred to herein as "reactive singlet oxygen species". Singlet oxygens are generally relatively long lived and can have a large radius of action.

It should be understood that the photosensitizer compound can be metallated or non-metallated. When metallated, as can be the case for various nitrogen-bearing macrocyclic compounds that are complexed with a metal, the metal can be selected based on the corresponding ROS type and availability (Type I or Type II) in response to light exposure. For example, when Chlorin photosensitizer compounds are metallated with copper, the ROS that are generated (Type I) tend to have low availability for microbial inhibition, for instance due to a very short half-life. In contrast, when the same photosensitizer compounds are metallated with other metals, such as magnesium, the ROS that are generated have higher availability for microbial inhibition. Thus, when metallated photosensitizer compounds are used, the metal can be selected to obtain a Type II photosensitizer and thereby provide enhanced ROS availability that can in turn facilitate suppression of microbial growth.

It should be understood that the term "singlet oxygen photosensitizer", as used herein, refers to a compound that produces reactive singlet oxygen species when excited by light. In other words, the term refers to a photosensitizer in which the Type II process defined above is dominant compared to the Type I process.

In some generic implementations, the photosensitizer compound is a photosensitive nitrogen-bearing macrocyclic compound that can include four nitrogen-bearing heterocyclic rings linked together. In some implementations, the nitrogen-bearing heterocyclic rings are selected from the group consisting of pyrroles and pyrrolines, and are linked together by methine groups (i.e., =CH-groups) to form tetrapyrroles. In an implementation according to the claimed invention, the nitrogen-bearing macrocyclic compound is for example a porphyrin compound (four pyrrole groups linked together by methine groups), a chlorin compound (three pyrrole groups and one pyrroline group linked together by methine groups), a bacteriochlorin compound or an isobacteriochlorin compound (two pyrrole groups and two pyrroline groups linked together by methine groups), or porphyrinoids (such as texaphrins or subporphyrins). Photosensitizer compounds not used in the method according to the claimed invention include a functional equivalent thereof having a heterocyclic aromatic ring core or a partially aromatic ring core (i.e., a ring core which is not aromatic through the entire circumference of the ring), or again multi-pyrrole compounds (such as boron-dipyrromethene). It should also be understood that the term "nitrogen-bearing macrocyclic compound" can be one of the compounds listed herein, or can be a combination of the compounds listed herein. The nitrogen-bearing macrocyclic compound employed in the method according to the claimed invention is selected from the group consisting of a porphyrin, a reduced porphyin, or a mixture thereof. Such nitrogen-bearing macrocyclic compounds can also be referred to as "multi-pyrrole macrocyclic compounds" (e.g., tetra-pyrrole macrocyclic compounds).

It should be understood that the term "reduced porphyrin" as used herein, refers to the group consisting of chlorin, bacteriochlorin, isobacteriochlorin and other types of reduced porphyrins such as corrin and corphin. It should be understood that the nitrogen-bearing macrocyclic compound can be a metal macrocyclic complex (e.g., a Mg-porphyrin) or a non-metal macrocycle (e.g., chlorin E6, Protoporphyrin IX or Tetra PhenylPorphyrin). The nitrogen-bearing macrocyclic compound can be an extracted naturally-occurring compound, or a synthetic compound.

In implementations where the porphyrin or the reduced porphyrin compound is metallated, the metal can be chosen such that the metallated nitrogen-bearing macrocyclic compound is a Type II photosensitizer (or a singlet oxygen photosensitizer) that generates reactive singlet oxygen species. For, example in the case of chlorins, non-limiting examples of metals that can enable generation of reactive singlet oxygen species through the formation of a Type II photosensitizer are Mg, Zn, Pd, Al, Pt, Sn or Si.

It should be understood that selecting metals that do not allow for the formation of Type II photosensitizers typically results in a much lower inhibition of the growth of microbial pathogens, at least because no or less reactive singlet oxygen species are generated. Non-limiting examples of metals that are known to not form Type II photosensitizers when complexed with chlorins are Cu, Co, Fe, Ni and Mn.

It should also be understood that the specific metals that can lead to the formation of Type II photosensitizers versus metals that do not allow for the formation of Type II photosensitizers may vary depending on the type of nitrogen-bearing macrocyclic compound to which it is to be bound. It should also be understood that non-metallated nitrogen-bearing macrocyclic compounds can be Type II photosensitizers. For example, chlorin e6 is a Type II photosensitizer.

It should be understood that the nitrogen-bearing macrocyclic compound to be used in the methods and compositions of the present description can also be selected based on their toxicity to humans or based on their impact on the environment. For example, porphyrins and reduced porphyrins tend to have a lower toxicity to humans as well as enhanced environmental biodegradability properties when compared to other types of nitrogen-bearing macrocyclic compounds such as phthalocyanines.

The following formulae illustrate several example nitrogen-bearing macrocyclic compounds described herein:

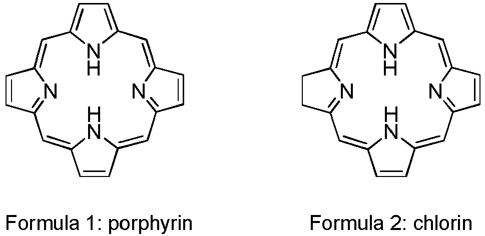

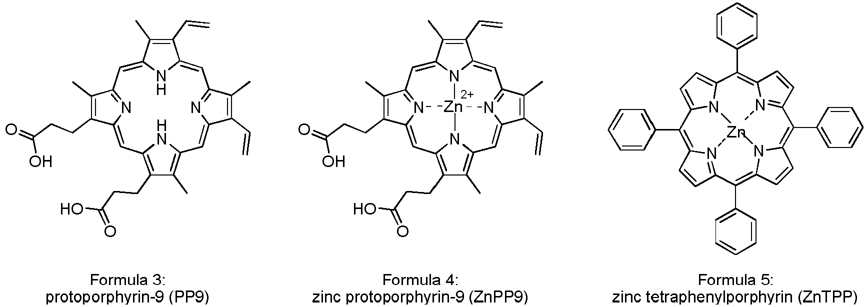

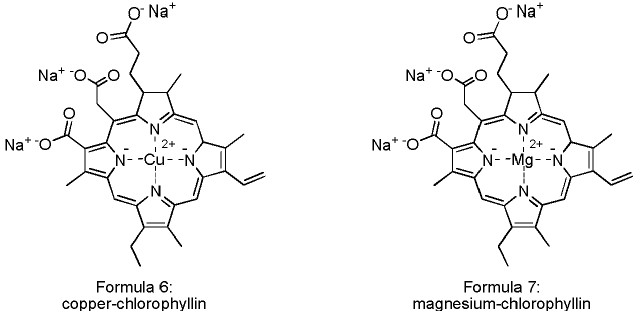

The nitrogen-bearing macrocyclic compounds such as Zn-TPP and Mg-Chlorophyllin can be obtained from various chemical suppliers such as Organic Herb Inc., Sigma Aldrich or Frontier Scientific. In some scenarios, the nitrogen-bearing macrocyclic compounds are not 100% pure and may include other components such as organic acids and carotenes. In other scenarios, the nitrogen-bearing macrocyclic compounds can have a high level of purity.

In implementations not according to the claimed invention, the photosensitizer compound can include multi-pyrrole linear compounds such as bilirubin, boron dipyrrimethene or similar compounds. In some implementations, the photosensitizer compound can include other types of compounds (linear or macrocyclic). A non-limiting example of photosensitizer compound includes diarylheptanoid compounds such as curcumin.

### Enhancer compounds

The enhancer compound, also referred to herein as a permeabilizing compound, can increase the overall impact of the photosensitizer compound on the inhibition of growth of the microbial pathogens. For example, the enhancer compound can increase the permeability of the outer membrane of the microbial pathogens to the photosensitizer compound.

In some generic implementations, the enhancer compound or permeabilizing compound includes a chelating agent. It should be understood that the term "chelating agent", as used herein, refers generally to a compound that can form several bonds to a single metal or ion.

In some implementations, the chelating agent can include at least one carboxylic group, at least one hydroxyl group, at least one phenol group and/or at least one amino group or an agriculturally acceptable salt thereof. In some implementations, the chelating agent can include an aminocarboxylic acid compound or an agriculturally acceptable salt thereof. The aminocarboxylic acid or agriculturally acceptable salt thereof can include an amino polycarboxylic acid or an agriculturally acceptable salt thereof. For example, the amino polycarboxylic acid can include two amino groups and two alkylcarboxyl groups bound to each amino group. The alkylcarboxyl groups can be methylcarboxyl groups.

According to the invention, the chelating agent comprises an aminopolycarboxylic acid or an agriculturally acceptable salt thereof.

According to the invention, the methods and compositions described herein include one or more aminopolycarboxylic acid chelating agents. Examples of aminopolycarboxylic acid chelating agents include, without limitation, ethylenediaminetetraacetic acid (EDTA), diethylenetriaminepentaacetic acid (DTP A), hydroxyethylenediaminetriacetic acid (HEDTA), and ethylenediaminedisuccinate (EDDS), cyclohexanediaminetetraacetic acid (CDTA), N-(2- hydroxyethyl)ethylenediaminetriacetic acid (EDTA-OH) glycol ether diaminetetraacetic acid (GEDTA), alanine diacetic acid (ADA), alkoyl ethylene diamine triacetic acids (e.g., lauroyl ethylene diamine triacetic acids (LED3 A)), asparticaciddiacetic acid (ASDA), asparticacidmonoacetic acid, diamino cyclohexane tetraacetic acid (CDTA), 1,2- diaminopropanetetraacetic acid (DPTA-OH), I,3-diamino-2-propanoltetraacetic acid (DTP A), diglycolic acid, ethanolaminediacetic acid, ethanoldiglycine (EDG), ethylenediaminediglutaric acid (EDDG), ethylenediaminedi(hydroxyphenylacetic acid (EDDHA), ethylenediaminedipropionic acid (EDDP), ethylenediaminedisuccinate (EDDS), ethylenediaminemonosuccinic acid (EDMS), ethylenediaminetetraacetic acid (EDTA), ethylenediaminetetrapropionic acid (EDTP), and ethyleneglycolaminoethylestertetraacetic acid (EGTA) and agriculturally acceptable salts (for example, the sodium salts, calcium salts and/or potassium salts) thereof.

One non-limiting example of chelating agent is ethylenediaminetetraacetic acid (EDTA) or an agriculturally acceptable salt thereof. The aminocarboxylate salt can for example be a sodium or calcium salt. EDTA can be represented as follows:

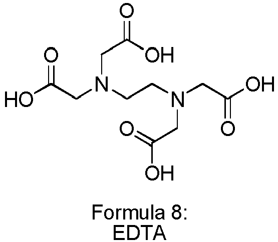

Another non-limiting example of chelating agent is polyaspartic acid or an agriculturally acceptable salt thereof (i.e., a polyaspartate), such as sodium polyaspartate, which can be generally represented as follows. The molecular weight of the polyaspartate salt can for example be between 2,000 and 3,000.

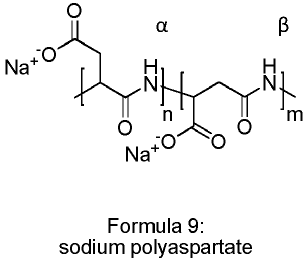

The chelating agent can thus be a polymeric compound, which can include aspartate units, carboxylic groups, and other features found in polyaspartates. The polyaspartate can be a co-polymer that has alpha and beta linkages, which may be in various proportions (e.g., 30% alpha, 70% beta, randomly distributed along the polymer chain). One non-limiting example of a sodium polyaspartate is Baypure^{®} DS 100, which can be represented as follows.

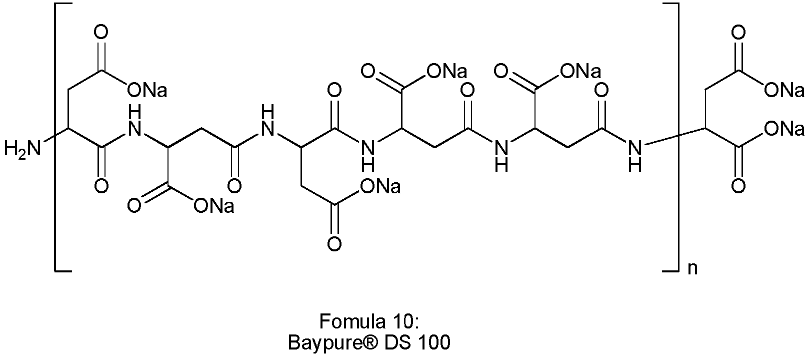

Other non-limiting examples of chelating agents include EDDS (ethylenediamine-N,N'-disuccinic acid), IDS (iminodisuccinic acid (N-1,2-dicarboxyethyl)-D,L-aspartic acid), isopropylamine, triethanolamine, triethylamine, ammonium hydroxide, tetrabutylammonium hydroxide, hexamine, GLDA (L-glutamic acid N,N-diacetic acid), or agriculturally acceptable salts thereof. The chelating agent can be metallated or non-metallated.

IDS can be used as a tetrasodium salt of IDS (e.g., tetrasodium iminodisuccinate), which can be Baypure^{®} CX100, represented as follows:

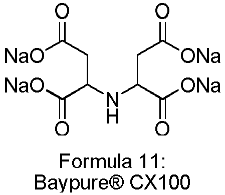

EDDS can be used as a trisodium salt of EDDS, represented as follows:

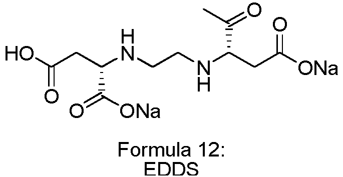

GLDA can be used as a tetrasodium salt of GLDA, represented as follows:

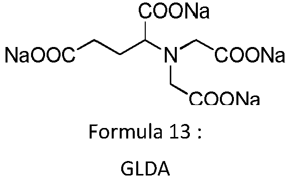

According to the methods and uses of the claimed invention, the presence of an aminopolycarboxylic acid or an agriculturally acceptable salt thereof is mandatory.

In some implementations, the methods and compositions described herein include one or more amino acid chelating agents. Examples of amino acid chelating agents include, without limitation, alanine, arginine, asparagine, aspartic acid, glutamic acid, glutamine, glycine, histidine, isoleucine, leucine, lysine, methionine, proline, serine, threonine, tyrosine, valine, and salts (for example, the sodium salts, calcium salts and/or potassium salts) and combinations thereof.

In some implementations, the methods and compositions described herein include one or more aromatic or aliphatic carboxylic acid chelating agents. Examples of aromatic or aliphatic carboxylic acid chelating agents include, without limitation, oxalic acid, succinic acid, pyruvic acid malic, acid, malonic acid, salicylic acid, and anthranilic acid, and salts (for example, the sodium salts, calcium salts and/or potassium salts) thereof. In some implementations, the methods and compositions described herein include one or more polyphenol chelating agents. One non-limiting examples of a polyphenol chelating agent is tannins such as tannic acid.

In some implementations, the methods and combinations described herein include one or more hydroxycarboxylic acid chelating agents. Examples of the hydroxycarboxylic acid type chelating agents include, without limitation, malic acid, citric acid, glycolic acid, heptonic acid, tartaric acid and salts (for example, the sodium salts, calcium salts and/or potassium salts) thereof.

In some implementations, the one or more chelating agents can be applied as the free acid, as an agriculturally acceptable salt, or combinations thereof.

In some implementations, each of one or more the chelating agent(s) is applied as the free acid. In other implementations, the chelating agent(s) can be applied as a salt. Exemplary salts include sodium salts, potassium salts, calcium salts, ammonium salts, amine salts, amide salts, and combinations thereof. In still other implementations, when more than one chelating agent is present, at least one of the chelating agents is applied as a free acid, and at least one of chelating agents is applied as a salt.

When the components are provided as part of a single composition, the composition can be provided to have certain concentrations and relative proportions of components. For example, the composition can have between about 100 nM and about 50 mM, between about 5 micromolar and about 10 mM, between about 1 micromolar and about 1000 micromolar, between about 5 micromolar and about 200 micromolar of the nitrogen-bearing macrocyclic compound, between about 10 micromolar and about 150 micromolar of the nitrogen-bearing macrocyclic compound, between about 25 micromolar and about 100 micromolar of the nitrogen-bearing macrocyclic compound, or between about 50 micromolar and about 75 micromolar of the nitrogen-bearing macrocyclic compound.

The composition can also have between about 2 micromolar and about 10,000 micromolar of the chelating agent, between about 5 micromolar and about 5,000 micromolar of the chelating agent, between about 10 micromolar and about 1,000 micromolar of the chelating agent, between about 25 micromolar and about 500 micromolar of the chelating agent, between about 50 micromolar and about 100 micromolar of the chelating agent, for example.

The relative proportion, by weight, of the nitrogen-bearing macrocyclic compound and the chelating agent in the composition can be between about 50:1 and about 1:1000, between about 20:1 and about 1:500, between about 10:1 and about 1:100, or between about 1:1 and about 1:10, for example.

### Additives and adjuvants

In some implementations, the methods and used compositions described herein include one or more agriculturally suitable adjuvants.

In some implementations, each of the one or more agriculturally suitable adjuvants is independently selected from the group consisting of one or more activator adjuvants (e.g., one or more surfactants; one or more oil adjuvants, e.g., one or more penetrants) and one or more utility adjuvants (e.g., one or more wetting or spreading agents; one or more humectants; one or more emulsifiers; one or more drift control agents; one or more thickening agents; one or more deposition agents; one or more water conditioners; one or more buffers; one or more anti-foaming agents; one or more UV blockers; one or more antioxidants; one or more fertilizers, nutrients, and/or micronutrients; and/or one or more herbicide safeners). Exemplary adjuvants are provided in Hazen, J.L. Weed Technology 14: 773-784 (2000), which is incorporated by reference in its entirety.

In some implementations, oil can be combined with the nitrogen-bearing macrocyclic compound. The oil can be selected from the group consisting of a mineral oil, a vegetable oil and a mixture thereof.

Non-limiting examples of vegetable oils include oils that include medium chain triglycerides (MCT), oil extracted from nuts. Other non-limiting examples of vegetable oils include coconut oil, canola oil, soybean oil, rapeseed oil, sunflower oil, safflower oil, peanut oil, cottonseed oil, palm oil, rice bran oil or mixtures thereof. Non-limiting examples of mineral oils include paraffinic oils, branched paraffinic oils, naphthenic oils, aromatic oils or mixtures thereof.

Non-limiting examples of paraffinic oils include various grades of poly-alpha-olefin (PAO). For example, the paraffinic oil can include HT60^{™}, HT100^{™}, High Flash Jet, LSRD^{™}, and N65DW^{™}. The paraffinic oil can include a paraffin having a number of carbon atoms ranging from about 12 to about 50, or from about 16 to 35. In some scenarios, the paraffin can have an average number of carbon atoms of 23. In some implementations, the oil can have a paraffin content of at least 80 wt%, or at least 90 wt%, or at least 99 wt%.

The nitrogen-bearing macrocyclic compound and the oil can be applied in a relative proportion, by weight, between about 50:1 and about 1:1000, between about 20:1 and about 1:500, between about 10:1 and about 1:100, or between about 1:1 and about 1:10, for example.

The nitrogen-bearing macrocyclic compound and the oil can be added sequentially or simultaneously. When added simultaneously, the nitrogen-bearing macrocyclic compound and the oil can be added as part of the same composition or as part of two separate compositions. In some implementations, the nitrogen-bearing macrocyclic compound and the oil can be combined in an oil-in-water emulsion. That is, the combination can include the nitrogen-bearing macrocyclic compound combined with the oil and water so that the combination is formulated as an oil-in-water emulsion. The oil-in-water emulsion can also include other additives such as a chelating agent, a surfactant or combinations thereof.

As used herein, the term "oil-in-water emulsion" refers to a mixture in which one of the oil (e.g., the paraffinic oil) and water is dispersed as droplets in the other (e.g., the water). In some implementations, an oil-in-water emulsion is prepared by a process that includes combining the paraffinic oil, water, and any other components and the paraffinic oil and applying shear until the emulsion is obtained. In other implementations, an oil-in-water emulsion is prepared by a process that includes combining the paraffinic oil, water, and any other components in the mixing tank and spraying through the nozzle of a spray gun.

In some implementations, the nitrogen-bearing macrocyclic compound and the chelating agent are part of a composition that includes a carrier fluid. A suitable carrier fluid allows obtaining a stable solution, suspension and/or emulsion of the components of the composition in the carrier fluid. In some implementations, the carrier fluid is water. In other implementations, the carrier fluid is a mixture of water and other solvents or oils that are non-miscible or only partially soluble in water.

It should also be understood that the compositions and combinations of the present description can be provided separately or together in the same composition. In some implementations, the components of the compositions of the present description can be packaged in a concentrated form, without the carrier fluid, and the carrier fluid (e.g., water) can be added to form directly by the operator that applies the composition to plants in order to form the composition to be applied.

In some implementations, a combination of nitrogen-bearing macrocyclic compound and oil can be used to inhibit growth of a microbial pathogen in a plant. The combination can be an oil-in-water emulsion, where the surfactant is selected such that the nitrogen-bearing macrocyclic compound is maintained in dispersion in the oil-in-water emulsion for delivery to the plant.

The combination can include a surfactant (also referred to as an emulsifier). The surfactant can be selected from the group consisting of an ethoxylated alcohol, a polymeric surfactant, a fatty acid ester, a polyethylene glycol, an ethoxylated alkyl alcohol, a monoglyceride, an alkyl monoglyceride, an amphipathic glycoside, and a mixture thereof. For example, the fatty acid ester can be a sorbitan fatty acid ester. The surfactant can include a plant derived glycoside such as a saponin. The surfactant can be present as an adjuvant to aid coverage of plant foliage. The surfactant can be an acceptable polysorbate type surfactant (e.g., Tween 80), a nonionic surfactant blend (e.g., Altox^{™} 3273), or another suitable surfactant. In some implementations, the polyethylene glycol can include a polyethylene glycol of Formula:

R¹-O-(CH₂CH₂O)_{f}-R²

wherein R¹ = H, CH₂=CH-CH₂ or COCH₃; R² = H, CH₂=CH-CH₂ or COCH₃; and f ≥ 1.

### Combination of photosensitizer and enhancer compounds

The photosensitizer compound and the enhancer compound can be provided as part of an anti-microbial composition. The anti-microbial composition employed in the method according to claim 1 or the use according to claim 14 can also include a delivery fluid, such as water, as well as other additives.

The anti-microbial composition can be provided to have certain concentrations and relative proportions of components. For example, the anti-microbial composition can have between about 100 nM and about 50 mM, between 1 micromolar and about 1000 micromolar, between 5 micromolar and about 200 micromolar of the photosensitizer compound, between about 10 micromolar and about 150 micromolar of the photosensitizer compound, between about 25 micromolar and about 100 micromolar of the photosensitizer compound, or between about 50 micromolar and about 75 micromolar of the photosensitizer compound.

The anti-microbial composition can also have between about 2 micromolar and about 10,000 micromolar of the enhancer compound, between about 5 micromolar and about 5,000 micromolar of the enhancer compound, between about 10 micromolar and about 1,000 micromolar of the enhancer compound, between about 25 micromolar and about 500 micromolar of the enhancer compound, between about 50 micromolar and about 100 micromolar of the enhancer compound, for example.

The relative proportion, by weight, of the photosensitizer compound and the enhancer compound in the anti-microbial composition can be between about 50:1 and about 1:1000, between about 20:1 and about 1:500, between about 10:1 and about 1:100, or between about 1:1 and about 1:10, for example.

In terms of other additives that can be present in the anti-microbial compositions, a surfactant can be present as an adjuvant to aid coverage of plant foliage. The surfactant can be an acceptable polysorbate type surfactant (e.g., Tween 80), a nonionic surfactant blend (e.g., Altox^{™} 3273), or another suitable surfactant.

### Application of photosensitizer and enhancer compounds

The photosensitizer compound and the enhancer compound can be applied to plants for photodynamic inhibition of microbial pathogens. The photosensitizer compound and the enhancer compound can be applied simultaneously to the plants. For example, an anti-microbial composition can be prepared to include the photosensitizer and enhancer compounds as well as a delivery fluid, such as water or a water-oil emulsion for example. The anti-microbial composition can be applied to the plant by spraying, misting, sprinkling, pouring, or any other suitable method. The anti-microbial composition can be applied to the foliage, roots and/or stem of the plant. Other additives can also be included in the anti-microbial composition, and other application methods can also be performed.

The plants on which the anti-microbial composition is applied can be outdoors or indoors (e.g., greenhouse) where they are exposed to natural sunlight, or in an indoor location where they are exposed to artificial light. The exposure to the incident light is provided such that the photosensitizer compound can generate ROS that, in turn, facilitate disruption of microbial growth.

In operation, the photosensitizer compound and the enhancer compound are brought into contact with the microbial pathogen that has infected a plant. The photosensitizer compound and the enhancer compound both come into contact with the cell walls and intercellular material of the pathogenic microbes.

Various mechanisms of action can be facilitated by the combination of the photosensitizer and enhancer compounds. For example, the enhancer compound can interact with the photosensitizer compound and/or with species present at the cell walls of the microbial pathogens, to disrupt the cell walls or enhance access or penetration of the photosensitizer compound, such that the phototreatment and consequent ROS generation can have an increased inhibitory impact on the microbial pathogens. The interactions of the enhancer compound can depend on the structures of the photosensitizer compound and the enhancer compound. For example, chelating agents such as EDTA can complex with metals that are present within the macrocycle of certain photosensitizer compounds and/or with counter-ions that are present at the cell walls of the microbial pathogens.

### Microbial pathogens and plants

The microbial pathogens to which the anti-microbial composition can be applied include fungal and bacterial pathogens.

The fungal pathogens to which the anti-microbial composition can be applied include *Alternaria solani,* which can infect plants such as tomatoes and potatoes; *Botrytis cinerea,* which can infect grapes, as well as soft fruits and bulb crops; or *Sclerotinia homoeocarpa,* which can commonly infect turfgrasses. Other fungal pathogens in the *Alternaria, Botrytis* or *Sclerotinia* genera can also receive application of the anti-microbial composition. The anti-microbial composition can be applied to plants that are affected or susceptible to pathogens that cause various plant diseases, e.g., *Colletotrichum, Fusarium, Puccinia, Erysiphaceae, Cercospora, Rhizoctonia, Bipolaris, Microdochium, Venturia inaequalis, Monilinia fructicola, Gymnosporangium juniperi-virginianae, Plasmodiophora brassicae, Ustilago* zeae, *Phytophthora, Pythium, Fusarium oxysporum, Phytophthora infestans, Taphrina deformans, Powdery Mildew, Phragmidium spp.,* or other fungal pathogens.

The bacterial pathogens to which the anti-microbial composition can be applied include gram-negative bacteria, such as *Erwinia amylovara,* or other bacterial pathogens in the genus *Erwinia* that can infect woody plants. E. *amylovara* causes fire blight on various plants, including pears, apples, and other Rosaceae crops. The anti-microbial composition can be applied to plants that are affected or susceptible to pathogens that cause various plant diseases, e.g., *Pseudomonas, Xanthomonas, Agrobacterium, Curtobacterium, Streptomyces, E. Coli, Xylella fastidiosa* (which causes Olive Quick Decline Syndrome (OQDS) disease), or other bacterial pathogens.

The anti-microbial composition can be used for various types of plants that are affected by microbial pathogens. Crop plants, lawn plants, trees and other plants infected with microbial pathogens can be treated.

It is also noted that the anti-microbial compositions described herein can have various inhibitory effects on the microbial pathogens depending on the type of plant and pathogen as well as the state of microbial infection. While herein it is described that the anti-microbial composition can inhibit microbial pathogen growth on a plant, such expressions should not be limiting but should be understood to include suppression of microbial pathogens, prevention against microbial pathogens, destruction of microbial pathogens or generally increasing toxicity toward microbial pathogens.

### Types of plants

The compound or composition may be used for various types of plants that may be affected microbial pathogens. The plant can be a non-woody crop plant, a woody plant or a turfgrass. The plant can be selected from the group consisting of a crop plant, a fruit plant, a vegetable plant, a legume plant, a cereal plant, a fodder plant, an oil seed plant, a field plant, a garden plant, a green-house plant, a house plant, a flower plant, a lawn plant, a turfgrass, a tree such as a fruit-bearing tree, and other plants that may be affected by microbial pathogens.

In some implementations, the plant is a turfgrass. As used herein, the term "turfgrass" refers to a cultivated grass that provides groundcover, for example a turf or lawn that is periodically cut or mowed to maintain a consistent height. Grasses belong to the Poaceae family, which is subdivided into six subfamilies, three of which include common turfgrasses: the *Festucoideae* subfamily of cool-season turfgrasses; and the *Panicoideae* and *Eragrostoideae* subfamiles of warm-season turfgrasses. A limited number of species are in widespread use as turfgrasses, generally meeting the criteria of forming uniform soil coverage and tolerating mowing and traffic. In general, turfgrasses have a compressed crown that facilitates mowing without cutting off the growing point. In the present context, the term "turfgrass" includes areas in which one or more grass species are cultivated to form relatively uniform soil coverage, including blends that are a combination of differing cultivars of the same species, or mixtures that are a combination of differing species and/or cultivars.

### Synergistic effect of the combinations

In some scenarios, the combinations can exhibit a synergistic response for inhibiting growth of microbial pathogens in plants. It should be understood that the terms "synergy" or "synergistic", as used herein, refer to the interaction of two or more components of a combination (or composition) so that their combined effect is greater than the sum of their individual effects, this may include, in the context of the present description, the action of two or more of the nitrogen-bearing macrocyclic compound, the oil and the chelating agent. In some scenarios, the nitrogen-bearing macrocyclic compound and the oil can be present in synergistically effective amounts. In some scenarios, the nitrogen-bearing macrocyclic compound and the chelating agent can be present in synergistically effective amounts. In some scenarios, the oil and the chelating agent can be present in synergistically effective amounts. In some scenarios, the nitrogen-bearing macrocyclic compound, the oil and the chelating agent can be present in synergistically effective amounts.

In some scenarios, the approach as set out in S. R. Colby, "Calculating synergistic and antagonistic responses of herbicide combinations", Weeds 15, 20-22 (1967), can be used to evaluate synergy. Expected efficacy, E, may be expressed as: E=X+Y(100-X)/100, where X is the efficacy, expressed in % of the untreated control, of a first component of a combination, and Y is the efficacy, expressed in % of the untreated control, of a second component of the combination. The two components are said to be present in synergistically effective amounts when the observed efficacy is higher than the expected efficacy.

### EXAMPLES & EXPERIMENTATION

Throughout the Examples, it should be understood that the % values provided in compositions refer to wt% values. Furthermore, the balance to 100 wt% of the listed % values is always a corresponding amount of water. For example: the entry "0.1% MgChl+0.1% EDTA-Ca+0.04% Atlox3273" means a composition consisting of 0.1 wt% MgChl, 0.1 wt% EDTA-Ca, 0.04 wt% Atlox3273 and water to arrive at 100 wt%.

### Example 1

In this example, application of a porphyrin photosensitizer compound and a chelating agent suppresses growth of Bacteria (*Erwinia amylovora)* that causes Fire Blight disease using photodynamic inhibition. In particular, Mg-chlorophyllin and disodium EDTA are used and their combination shows to inactivate *E. amylovora* growth.

*E. amylovora* is grown in liquid medium. Samples are incubated for 30 min with 100 µM of Mg-Chlorophyllin with or without 5 mM of Disodium-EDTA, and then illuminated with 395 nm (fluence 26.6 J cm⁻²) for 30 mins. CFU of the bacteria is counted on the plates. The following table summarizes the results:

**Table 1: Results on relative inactivation of bacteria after PDI treatment**

| **Treatment** | **Relative inactivation, CFU** |
|---|---|
| untreated control-dark | 1 |
| untreated control-light | 0.9 |
| Mg-Chlorophyllin (100 µM) without EDTA (5mM) in light | 1.9 |
| Mg-Chlorophyllin (100 µM) with EDTA (5 mM) in light | 2.1×10⁴ |
| EDTA (5 mM) alone in light | 11.1 |

The phototreatment of chlorophyllin or EDTA alone has little or no effect on *E. amylovora* inactivation at the tested concentration. Combining EDTA with chlorophyllin increases the antibacterial effect by about 1000-fold at the tested concentration. *E. amylovora* is almost completely inactivated with the combination of the two compounds under the test conditions.

### Example 2

In this example, application of a porphyrin photosensitizer compound and a chelating agent suppressed growth of fungal pathogen *Alternaria solani* using photodynamic inhibition. In particular, Mg-chlorophyllin and disodium EDTA were used and their combination was shown to inactivate *Alternaria solani* growth.

In the experiments, *Alternaria solani* mycelia were grown in liquid medium for 24 hours. Small spheres of the mycelia (average diameter 2mm) were incubated for 100 minutes with 100 µM of Mg-Chlorophyllin with 0 to 5mM of Disodium-EDTA. Samples were illuminated with 395 nm (fluence 106.6 J cm⁻²) for 120 mins and the radial growth of mycelial patches after 7 days on agar medium was measured. A sample was considered dead, if there was no growth observable after 7 days on agar plates. The following table summarizes the results:

**Table 2: Results on percentage of dead Alternaria solani mycelia**

| **Treatment** | **dead%** |
|---|---|
| Mg-Chlorophyllin (100 µM) without EDTA (0M) in light | 11.5% |
| Mg-Chlorophyllin (100 µM) with EDTA (5 µM) in light | 33.3% |
| Mg-Chlorophyllin (100 µM) with EDTA (50 µM) in light | 66.7% |
| Mg-Chlorophyllin (100 µM) with EDTA (500 µM) in light | 83.3% |
| Mg-Chlorophyllin (100 µM) with EDTA (5 mM) in light | 94.1% |
| EDTA (5mM) alone in light | 0% |
| EDTA (50mM) alone in light | 0% |
| EDTA (100mM) alone in light | 0% |
| EDTA (500mM) alone in light | 0% |
| EDTA (5mM) alone no light | 0% |
| EDTA (50mM) alone no light | 0% |
| EDTA (100mM) alone no light | 11.1% |
| EDTA (500mM) alone no light | 11.1% |

The phototreatment of chlorophyllin or EDTA alone had little or no effect on fungal mycelia. Adding a combination of EDTA and 100 µM Chlorophyllin increased the suppression on the growth of fungal mycelia. *Alternaria solani* was almost completely inactivated with the combination of 100µM Chlorophyllin and 5mM disodium-EDTA.

### Example 3

In this example, application of a porphyrin photosensitizer compound and a chelating agent suppressed growth of *Botrytis cinerea* fungi that causes Gray Mold disease using photodynamic inhibition. In particular, Mg-chlorophyllin and disodium EDTA were used and their combination was shown to inactivate *Botrytis cinerea* growth.

In the experiments, *Botrytis cinerea* mycelia were grown in liquid medium for 48 hours. Small spheres of the mycelia (average diameter 2 mm) were incubated for 100 minutes with Mg-Chlorophyllin with or without 5mM Disodium-EDTA. Samples were illuminated with 395 nm (fluence 106.6 J cm⁻²) for 120 minutes and the radial growth of mycelial patches after 7 days on agar medium was measured. A sample was considered dead, if there was no growth observable after 7 days on agar plates. The following table summarizes the results:

**Table 3: Results on percentage of dead B. cinerea mycelia**

| **Treatment** | **dead%** |
|---|---|
| Untreated control in dark | 0 |
| Untreated control with light | 0 |
| EDTA alone in dark (5mM) | 0 |
| EDTA alone with light (5mM) | 0 |
| Mg-Chlorophyllin (1 µM) with EDTA (5 mM) in light | 0 |
| Mg-Chlorophyllin (10 µM) with EDTA (5 mM) in light | 33.3% |
| Mg-Chlorophyllin (100 µM) with EDTA (5 mM) in light | 91.7% |
| Mg-Chlorophyllin (10 µM) alone in light | 0 |
| Mg-Chlorophyllin (100 µM) alone in light | 0 |

The phototreatment of chlorophyllin or EDTA alone had little or no effect on fungal mycelia. Adding EDTA into Chlorophyllin increased the suppression on the growth of fungal mycelia, notably at Chlorophyllin concentrations of 10 µM or above at the test conditions. *Botrytis cinerea* was largely inactivated when treated by combination of 100 µM Chlorophyllin and 5mM disodium-EDTA.

### Example 4

In this example, application of a porphyrin photosensitizer compound and a chelating agent suppressed growth of *Botrytis cinerea* fungi that causes Gray Mold disease using photodynamic inhibition. In particular, Mg-chlorophyllin and calcium disodium EDTA or disodium EDTA were used, and the combination of the porphyrin photosensitizer compound and each chelating agent was shown to inactivate *Botrytis cinerea* growth.

In the experiments, *Botrytis cinerea* mycelia were grown in liquid medium for 48 hours. Small spheres of the mycelia (average diameter 2 mm) were incubated for 100 minutes with Mg-Chlorophyllin with or without 5mM EDTA (calcium or disodium). Samples were illuminated with 395 nm (fluence 106.6 J cm⁻²) for 120 min and the radial growth of mycelial patches after 7 days on agar medium was measured. A sample was considered dead, if there was no growth observable after 7 days on agar plates. The following table summarizes the results:

**Table 4: Results on percentage of dead B. cinerea mycelia for Na or Ca EDTA**

| **Treatment-with Ca-EDTA** | **dead%** |
|---|---|
| Untreated control in dark | 0 |
| Untreated control with light | 0 |
| EDTA-Ca alone with light (5 mM) | 0 |
| Mg-Chlorophyllin (100 µM) with EDTA-Ca (5 mM) in light | 47.6% |
| Mg-Chlorophyllin (100 µM) alone in light | 0 |

| **Treatment-with Na-EDTA** | **dead%** |
|---|---|
| Untreated control in dark | 0 |
| Untreated control with light | 0 |
| EDTA-Na alone with light (5mM) | 0 |
| Mg-Chlorophyllin (100 µM) with EDTA-Na (5mM) in light | 91.7% |
| Mg-Chlorophyllin (100 µM) alone in light | 0 |

The phototreatment of chlorophyllin or EDTA alone (including calcium and disodium EDTA) had limited effect on fungal mycelia. For both tested chelating agents, adding EDTA into Chlorophyllin increased the suppression on the growth of fungal mycelia, notably at Chlorophyllin concentrations of 10 uM or above at the test conditions. *Botrytis cinerea* was greatly inactivated when treated by combination of 100 µM Chlorophyllin and 5mM Na-EDTA, and was also inactivated when treated by combination of 100µM Chlorophyllin and 5mM Ca-EDTA. The efficiency was lower than with Na-EDTA.

### Example 5

In this example, application of a porphyrin photosensitizer compound and a chelating agent suppressed growth of Early Blight fungi *(Alternaria solani)* using photodynamic inhibition. In particular, Chlorin E6 and disodium EDTA were used, and the combination of the porphyrin photosensitizer compound and the chelating agent was shown to inactivate *Alternaria solani* growth.

In the experiments, *Alternaria solani* mycelia were grown in liquid medium for 24 hours. Small spheres of the mycelia (average diameter 2mm) were incubated for 100 minutes with Chlorin E6 with or without 5mM of disodium-EDTA. Samples were illuminated with 395 nm (fluence 106.6 J cm⁻²) for 120 mins and the radial growth of mycelial patches after 7 days on agar medium was measured. A sample was considered dead, if there was no growth observable after 7 days on agar plates. The following table summarizes the results:

**Table 5: Results on percentage of dead Alternaria solani mycelia**

| **Treatment** | **dead%** |
|---|---|
| no light, 0 µM Chlorin E6 | 0.0% |
| no light, 100 µM Chlorin E6 | 0.0% |
| light, 0 µM Chlorin E6 | 0.0% |
| light, 1 µM Chlorin E6 | 0.0% |
| light, 10 µM Chlorin E6 | 8.3% |
| light, 100 µM Chlorin E6 | 0% |
| no light, 5 mM Na-EDTA alone | 0% |
| no light, 100 µM Chlorin E6+5 mM Na-EDTA | 0% |
| light, 5 mM Na-EDTA alone | 0% |
| light, 1 µM Chlorin E6+5 mM Na-EDTA | 0% |
| light, 10 µM Chlorin E6+5 mM Na-EDTA | 88.8% |
| light, 100 µM Chlorin E6+5 mM Na-EDTA | 16.7% |

The phototreatment of Chlorin E6 or EDTA alone had little or no effect on fungal mycelia. Adding EDTA into Chlorin E6 increased the suppression on the growth of fungal mycelia, notably at Chlorophyllin concentrations of 10 µM or above at the test conditions. *Alternaria solani* was largely inactivated when treated by combination of 10 uM Chlorophyllin and 5mM disodium-EDTA.

### Example 6 - Test on host plant Creeping bentgrass

In this example, control of dollar spot *(Sclerotinia homoeocarpa)* on creeping bentgrass was assessed. In terms of methodology, bentgrass (L-93) were grown in 3.5 inch pots for 4-6 weeks. Plants were inoculated with 0.2 g/pot of wheat seed inoculum containing 5 different isolates of *Sclerotinia homoeocarpa* (dollar spot pathogen). After 24hrs, inoculated plants were sprayed with different formula. Four reps of each treatment were done. Following foliar application, plants were incubated in the dark for 8hr, then placed randomly under the LED lights (PAR ca. 300 uMoles/m²/sec). Four reps of each treatment were done. LED Light cycle set from 6pmOFF, 2am ON, to maintain 16 hour:8 hour, light:dark cycle. Seven days post inoculation (DPI), pots of *A. stolonifera* were assessed for % yellowing of leaf blades and % mycelial coverage of leaf blades with *S. homoeocarpa.*

**Table 6: Results on inhibition of Sclerotinia homoeocarpa on bentgrass**

| | | **Mean % Yellowing** | | **Mean % Mycelium** | |
|---|---|---|---|---|---|
| | **Treatment** | 7 DPI | inhibition% | 7 DPI | inhibition% |
| 1 | 0.1% MgChin+0.04% Atlox3273 | 20 | 5.88% | 27.5 | 24% |
| 2 | 0.1%EDTA-Ca+0.04%Atlox3273 | 26.25 | -23.53% | 37.5 | -3% |
| 3 | 0.1 % MgChl+0.1%EDTA-Ca+0.04%Atlox3273 | 13.75 | 35.29% | 20 | 45% |
| Control + p | non-treated, inoculated control | 21.25 | - | 36.25 | - |
| Control - p | non-treated, non-inoculated control | 0 | - | 0 | - |

Altox3273 is an example of a surfactant that can be used in the composition. Such surfactant compounds can be used as adjuvants to aid coverage of plant foliage, for example.

From the above results, it can be seen that the combination of MgChl and EDTA provided enhanced photodynamic inhibition on a plant (creeping bentgrass) compared to each compound used alone. In this example, the combination was provided as an aqueous composition that further included a surfactant.

### Example 7

In this example, control of dollar spot fungus *(Sclerotinia homoeocarpa)* was assessed for Mg Chlorophyllin, sodium polyaspartate, and the combination thereof. Treatments were amended into Potato Dextrose Agar (PDA) at desired concentrations. Then, a 5 mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) was left in the dark and one set was placed under illumination for the remainder of the experiment (all at 21°C). Radial growth of the fungus was monitored daily until the growth of *S. homoeocarpa* on non-amended PDA reached the edge of the Petri-dish. Illumination was provided by fluorescent lights emitting about 180 µmol/m²/s photosynthetically active radiation (PAR).

**Table 7A: Results on inhibition in dark**

| **Treatment¹** | **Rate (µM)⁵** | **Mean Radial Growth (mm)^{2,3}** | **% Inhibition⁴** |
|---|---|---|---|
| Non-amended (control) | 0 | 13.3 | - |
| Mg Chlorophyllin (Mg Chl) | 31 | 11.2 | 24.1 |
| Baypure DS (sodium polyaspartate) | 50 | 13.7 | 7.1 |
| Baypure DS (sodium polyaspartate) | 500 | 10.8 | 27.1 |
| Baypure DS (sodium polyaspartate) | 1000 | 9 | 39.1 |
| Baypure DS (sodium polyaspartate) | 2000 | 5.5 | 62.8 |
| Mg Chin + Baypure DS | 31+50 | 11.4 | 22.6 |
| Mg Chin + Baypure DS | 31+500 | 10.7 | 27.4 |
| Mg Chin + Baypure DS | 31+1000 | 8.3 | 44.0 |
| Mg Chin + Baypure DS | 31+2000 | 5.4 | 63.2 |

**Table 7B: Results on inhibition in light**

| **Treatment¹** | **Rate (µM)⁵** | **Mean Radial Growth (mm)^{2,3}** | **% Inhibition⁴** |
|---|---|---|---|
| Non-amended (control) | 0 | 13.6 | - |
| Mg Chlorophyllin | 31 | 6.6 | 51.0 |
| Baypure DS (sodium polyaspartate) | 50 | 14.4 | -7.0 |
| Baypure DS (sodium polyaspartate) | 500 | 10.7 | 21.0 |
| Baypure DS (sodium polyaspartate) | 1000 | 7.6 | 43.6 |
| Baypure DS (sodium polyaspartate) | 2000 (1.25%) | 4.4 | 67.5 |
| Mg Chin + Baypure DS | 31+50 | 5.9 | 56.0 |
| Mg Chin + Baypure DS | 31+500 | 5 | 63.0 |
| Mg Chin + Baypure DS | 31+1000 | 3.4 | 74.9 |
| Mg Chin + Baypure DS | 31+2000 | 0.6 | 95.5 |

| | | | |
|---|---|---|---|
| Notes on above Tables: ¹Treatments were amended into Potato Dextrose Agar (PDA); ²Means were calculated based on 3 fungal isolates replicated 3 times, with 2 measurements per replicate (18 total measurements); ³Means represent growth that occurred between 24 and 48 hours of incubation at 21°C; ⁴% Inhibition calculated relative to non-amended control. ⁵Mw of Baypure DS listed as 2,000-3,000. Mw of 2,500 g/mol was used for calculations. | | | |

From the above results, it can be seen that the combination of MgChl and polyaspartate provided enhanced photodynamic inhibition compared to each compound used alone.

### Example 8

*Xanthomonas axonopodis* are bacterial pathogens that cause citrus canker. Citrus canker is a highly contagious plant disease than can destroy an entire crop field. Mg-Chlorophyllin has been found to have little effect to control the bacterial in the assay (same protocol as Example 1, on *Erwinia Amylovora).* However, it has been found that combining Chlorophyllin with EDTA (e.g., 5mM sodium EDTA) with light illumination provided enhanced control of *Xanhomonas axonopodis.* Positive results were obtained at several chlorophyllin concentrations and exposure times.

Xanthomonas were grown in liquid medium. Samples were incubated for 30 mins or 5 mins with Mg-Chlorophyllin and with Disodium-EDTA for 30 mins, and then illuminated with 395 nm (fluence 26.6 J cm-2) for 30 mins. CFU of the bacteria was counted on the plates.

**Table 8: Results of Xanthomonas Axonopodis count**

| **Treatment** | **CFU/mL** | log CFU/mL | Inhibition% |
|---|---|---|---|
| Untreated Control in dark | 3.04E+07 | 7.5 | |
| Mg-Chlorophyllin 100 µM+5mM EDTA, in dark | 2.94E+06 | 6.5 | 90.3% |
| Mg-Chlorophyllin 100 µM+5mM EDTA, light 30min | 4.09E+02 | 2.6 | 100.0% |
| Mg-Chlorophyllin 10 µM+5mM EDTA, light 30min | 3.92E+03 | 3.6 | 100.0% |
| Mg-Chlorophyllin 1 µM+5mM EDTA, light 30min | 3.62E+05 | 5.6 | 98.8% |
| Mg-Chlorophyllin 100 µM+5mM EDTA, light 5min | 3.33E+02 | 2.5 | 100.0% |
| Mg-Chlorophyllin 10 µM+5mM EDTA, light 5min | 7.32E+04 | 4.9 | 99.8% |
| Mg-Chlorophyllin 1 µM+5mM EDTA, light 5min | 5.69E+05 | 5.8 | 98.1% |

### Example 9 (Curcumin - not a nitrogen-bearing macrocyclic compound) - not according to the invention

Experiments have indicated that the combination of EDTA and Curcumin provides enhanced photodynamic suppression of fungal growth compared to each component individually. This example indicates that compounds that are linear and/or do not have a macrocyclic core structure, as do porphyrins, can also be combined with chelating agents for photodynamic inhibition applications.

In this example, control of dollar spot fungus *(Sclerotinia homoeocarpa)* with Curcumin, EDTA, and the combination was assessed. Curcumin is dissolved in DMSO first and then diluted with 0.25% Tween solution. Treatments were amended into Potato Dextrose Agar (PDA) at desired concentrations. Then, a 5mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) is left in the dark and on set is placed under illumination for the remainder of the experiment (all at 21°C). Radial growth of the fungus is monitored daily until the growth of S. *homoeocarpa* on non-amended PDA reaches the edge of the Petri-dish. Illumination is provided by fluorescent lights emitting about 180 µmol/m²/s photosynthetically active radiation (PAR).

**Table 9A: Results in dark**

| **Treatment¹** | **Rate (µM)** | **Mean Radial Growth (mm)2,3** | **% Inhibition⁴** |
|---|---|---|---|
| Non-amended (control) | 0 | 14.2 | - |
| Curcumin (DMSO) disp. in 0.25% Tween 80 | 1000 | 9.9 | 33.0 |
| Curcumin (DMSO) disp. in 0.25% Tween 80 | 500 | 13.1 | 11.4 |
| Curcumin (DMSO), 0.25% T80, 100 µM Ca-EDTA (RD174) | 1000 | 2.3 | 84.4 |
| Curcumin (DMSO), 0.25% T80, 100 µM Ca-EDTA (RD174) | 500 | 3.4 | 77.0 |
| Tween 80 0.25% | 0 | 14.1 | 4.89 |
| Ca-EDTA (RD174) 100 µM | 0 | 2.8 | 80.8 |
| Tween 80 0.25% + Ca-EDTA (RD174) 100 µM | 0 | 3.06 | 79.3 |
| DMSO (in de-ionized water) 0.0736% | 0 | 13.5 | 8.6 |

**Table 9B: Results on inhibition in light**

| **Treatment¹** | **Curcumin rate (µM)** | **Mean Radial Growth (mm)^{2,3}** | **% Inhibition⁴** |
|---|---|---|---|
| Non-amended (control) | 0 | 12.7 | - |
| Curcurmin (DMSO) disp. in 0.25% Tween 80 | 1000 | 9.6 | 28.9 |
| Curcurmin (DMSO) disp. in 0.25% Tween 80 | 500 | 12.4 | 8.1 |
| Curcurmin (DMSO), 0.25% T80, 100 uM Ca-EDTA (RD174) | 1000 | 0.7 | 94.8 |
| Curcurmin (DMSO), 0.25% T80, 100 uM Ca-EDTA (RD174) | 500 | 1.9 | 85.9 |
| Tween 80, 0.25% | 0 | 15.1 | -11.9 |
| Ca-EDTA (RD174), 100 µm | 0 | 3.2 | 76.5 |
| Tween 80 0.25% + Ca-EDTA (RD174) 100 µm | 0 | 6.3 | 53.5 |
| DMSO (in de-ionized water) 0.0736% | 0 | 12.8 | 4.9 |

| | | | |
|---|---|---|---|
| Notes on above tables: ¹Treatments were amended into Potato Dextrose Agar (PDA) ²Means were calculated based on 3 fungal isolates replicated 3 times, with 2 measurements per replicate (18 total measurements) ³Means represent growth that occurred between 24 and 48 hours of incubation at 21°C ⁴% Inhibition calculated relative to non-amended control Mw of Baypure^{®} DS listed as 2,000 - 3,000, so based calculations on 2,500 g/mol. | | | |

### Example 10

Experiments have indicated that the combination of EDDS trisodium salt and Mg-Chlorophyllin provides enhanced photodynamic suppression of bacterial growth (*E. Coli)* compared to each component individually.

**Table 10: Results on inhibition in light (EDDS and MgChIn)**

| **Treatment** | **CFU/mL** | **LogCFU/mL** | **% Inactivation** |
|---|---|---|---|
| 50mM EDDS | 6.50E+05 | 5.81 | 88.1 |
| 10 µM MgChln | 1.30E+05 | 5.11 | 97.6 |
| 1 µM MgChln | 2.73E+05 | 5.44 | 95.0 |
| 10 µM MgChln+50mM EDDS | <10000 | <4 | >99.8 |
| 1 µM MgChln+50mM EDDS | <10000 | <4 | >99.8 |
| untreated control | 5.47E+06 | 6.74 | |

### Example 11

Experiments have indicated that the combination of IDS (Baypure^{®} CX) and Mg-Chlorophyllin provides enhanced photodynamic suppression of bacterial growth (*E. Coli)* compared to each component individually.

**Table 11: Results on inhibition in light (IDS and MgChin)**

| Treatment | CFU/mL | LogCFU/mL | % Inactivation |
|---|---|---|---|
| 5mM Baypure CX | 2.09E+06 | 6.32 | 67.8 |
| 1 µM MgChIn | 9.07E+05 | 5.96 | 86.1 |
| 1 µM MgChIn + 5mM Baypure CX | 3.37E+05 | 5.53 | 94.8 |
| Culture Control | 6.50E+06 | 6.81 | |

### Example 12

Experiments have indicated that the combination of polyaspertate (Baypure^{®} DS) and Mg-Chlorophyllin provides enhanced photodynamic suppression of bacterial growth (*E. Coli)* compared to each component individually.

**Table 12: Results on inhibition in light (polyaspertate and MgChin)**

| **Treatment** | **CFU/mL** | **LogCFU/mL** | **% Inactivation** |
|---|---|---|---|
| Baypure DS (5%) | 4.20E+06 | 6.62 | 40.3 |
| 1 µM MgChln | 6.13E+05 | 5.79 | 91.3 |
| 1 µM MgChln+5% Baypure DS | 6.67E+03 | 3.82 | 99.9 |
| untreated control | 7.03E+06 | 6.85 | |

### Example 13 (Curcumin - not a nitrogen-bearing macrocyclic compound) - not according to the invention

Experiments have indicated that the combination of EDDS trisodium salt and Curcumin provides enhanced photodynamic suppression of bacteria (*E*. *Coli*) growth compared to each component individually. Curcumin solution was prepared by making fresh 100mM stock in Arlasolve solvent and diluting in 0.25% Tween solution immediately before use.

**Table 13: Results on inhibition in light (EDDS and Curcumin)**

| **Treatment** | **CFU/mL** | **LogCFU/mL** | **% Inactivation** |
|---|---|---|---|
| 1mM Curcumin in 0.25% Tween 80 solution | 1.24E+06 | 6.09 | 86.0 |
| 5.8%EDDS (50mM) | 1.05E+06 | 6.02 | 88.2 |
| 1mM Curcumin in 0.25% Tween 80 solution+50mM EDDS | <10000 | <4 | >99.8 |
| untreated control | 8.87E+06 | 6.95 | |

### Example 14

Control of dollar spot fungus *(Sclerotinia homoeocarpa)* was assessed for Mg Chlorophyllin, IDS (Baypure^{®} CX), and the combination thereof. Treatments were amended into Potato Dextrose Agar (PDA) at desired concentrations. Then, a 5mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) was left in the dark and one set was placed under illumination for the remainder of the experiment (all at 21°C). Radial growth of the fungus was monitored daily until the growth of S. *homoeocarpa* on non-amended PDA reached the edge of the Petri-dish. Illumination was provided by fluorescent lights emitting about 180 µmol/m²/s photosynthetically active radiation (PAR).

**Table 14A: Results on inhibition in dark**

| **Treatment¹** | **Rate (µM)** | **Mean Radial Growth (mm)^{2,3}** | **% Inhibition⁴** |
|---|---|---|---|
| Non-amended (control) | 0 | 13.5 | - |
| Mg Chlorophyllin (Mg Chl) | 31 | 9.1 | 32.5 |
| Baypure CX (IDS) | 500 | 12.7 | 6.2 |
| Baypure CX (IDS) | 1000 | 11.4 | 15.2 |
| Baypure CX (IDS) | 2000 | 9.3 | 31.3 |
| Mg Chl + Baypure CX | 31+500 | 9.2 | 32.1 |
| Mg Chl + Baypure CX | 31+1000 | 9.2 | 31.7 |
| Mg Chl + Baypure CX | 31+2000 | 7.9 | 41.2 |

**Table 14B: Results on inhibition in light**

| **Treatment¹** | **Rate (µM)** | **Mean Radial Growth (mm)^{2,3}** | **% Inhibition⁴** |
|---|---|---|---|
| Non-amended (control) | 0 | 12.9 | - |
| Mg Chlorophyllin (Mg Chl) | 31 | 5.3 | 59.2 |
| Baypure CX (IDS) | 500 | 11.8 | 8.6 |
| Baypure CX (IDS) | 1000 | 10.6 | 18.0 |
| Baypure CX (IDS) | 2000 | 8.9 | 30.9 |
| Mg Chl + Baypure CX | 31+500 | 4.5 | 65.2 |
| Mg Chl + Baypure CX | 31+1000 | 3.7 | 71.2 |
| Mg Chl + Baypure CX | 31+2000 | 3.1 | 76.0 |

| | | | |
|---|---|---|---|
| Notes on above tables: ¹Treatments were amended into Potato Dextrose Agar (PDA); ²Means were calculated based on 3 fungal isolates replicated 3 times, with 2 measurements per replicate (18 total measurements); ³Means represent growth that occurred between 24 and 48 hours of incubation at 21°C; ⁴ % Inhibition calculated relative to non-amended control. | | | |

### Example 15

Control of dollar spot fungus *(Sclerotinia homoeocarpa)* was assessed for Mg Chlorophyllin, L-glutamic acid N,N-diacetic acid, tetrasodium salt (GLDA-NA₄, Dissolvine GL-47-S), and the combination thereof. Treatments were amended into Potato Dextrose Agar (PDA) at desired concentrations. Then, a 5 mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) was left in the dark and one set was placed under illumination for the remainder of the experiment (all at 21°C). Radial growth of the fungus was monitored daily until the growth of *S. homoeocarpa* on non-amended PDA reached the edge of the Petri-dish. Illumination was provided by fluorescent lights emitting about 180 µmol/m²/s photosynthetically active radiation (PAR).

**Table 15A: Results on inhibition in dark**

| **Treatment¹** | **Rate (µM)** | **Mean Radial Growth (mm)^{2,3}** | **% Inhibition⁴** |
|---|---|---|---|
| Non-amended (control) | 0 | 13.5 | - |
| Mg Chlorophyllin (Mg Chl) | 31 | 9.1 | 32.5 |
| Dissolvine GL-47-S (GLDA-Na4) | 500 | 13.2 | 2.1 |
| Dissolvine GL-47-S (GLDA-Na4) | 2500 | 4.6 | 66.3 |
| Mg Chl + Dissolvine GL-47-S (GLDA-Na4) | 31+500 | 10.1 | 25.5 |
| Mg Chl + Dissolvine GL-47-S (GLDA-Na4) | 31+2500 | 3.4 | 74.5 |

**Table 15B: Results on inhibition in light**

| **Treatment¹** | **Rate (µM)** | **Mean Radial Growth (mm)^{2,3}** | **% Inhibition⁴** |
|---|---|---|---|
| Non-amended (control) | 0 | 12.9 | - |
| Mg Chlorophyllin (Mg Chl) | 31 | 5.3 | 59.2 |
| Dissolvine GL-47-S (GLDA-Na4) | 500 | 12.1 | 6.4 |
| Dissolvine GL-47-S (GLDA-Na4) | 2500 | 3.4 | 73.8 |
| Mg Chl + Dissolvine GL-47-S (GLDA-Na4) | 31+500 | 4.4 | 66.1 |
| Mg Chl + Dissolvine GL-47-S (GLDA-Na4) | 31+2500 | 0.2 | 98.3 |

| | | | |
|---|---|---|---|
| Notes on above tables: ¹Treatments were amended into Potato Dextrose Agar (PDA); ²Means were calculated based on 3 fungal isolates replicated 3 times, with 2 measurements per replicate (18 total measurements); ³Means represent growth that occurred between 24 and 48 hours of incubation at 21°C; ⁴ % Inhibition calculated relative to non-amended control. | | | |

### Example 16 (no aminopolycarboxylic acid) - not according to the invention

In this example, control of dollar spot fungus *(Sclerotinia homoeocarpa)* with metallated chlorins of Type II was assessed. Treatments were amended into Potato Dextrose Agar (PDA) at desired concentrations. Then, a 5mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) is left in the dark and one set is placed under illumination for the remainder of the experiment (all at 21°C). Radial growth of the fungus is monitored daily until the growth of *S. homoeocarpa* on non-amended PDA reaches the edge of the Petri-dish. Illumination is provided by fluorescent lights emitting about 180 µmol/m²/s photosynthetically active radiation (PAR).

**Table 16A: Results in dark**

| **Treatment¹** | **Rate (µM)** | **Mean Radial Growth (mm)^{2,3}** | **% Inhibition⁵** |
|---|---|---|---|
| Non-amended (control) | 0 | 13.5 | - |
| ZnCe6 | 5 | 13.2 | 2.47 |
| ZnCe6 | 10 | 12.5 | 7.41 |
| ZnCe6 | 31 | 10.3 | 23.46 |
| AlCe6 | 5 | 13.8 | 1.85 |
| AlCe6 | 10 | 13.0 | 3.70 |
| AlCe6 | 31 | 13.1 | 3.09 |
| SnCe6 | 5 | 13.2 | 2.47 |
| SnCe6 | 10 | 13.0 | 3.70 |
| SnCe6 | 31 | 10.8 | 19.75 |
| PdCe6 | 5 | 11.5 | 18.82 |
| PdCe6 | 10 | 9.0 | 36.47 |
| PdCe6 | 31 | 8.1 | 42.75 |

| | | | |
|---|---|---|---|
| Notes on above table: ¹Treatments were amended into Potato Dextrose Agar (PDA) ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table 16B: Results on inhibition in light**

| **Treatment¹** | **Chlorin Rate (µM)** | **Mean Radial Growth (mm)^{2,3}** | **% Inhibition⁵** |
|---|---|---|---|
| Non-amended (control) | 0 | 12.8 | - |
| ZnCe6 | 5 | 11.5 | 10.4 |
| ZnCe6 | 10 | 10.1 | 21.4 |
| ZnCe6 | 31 | 7.5 | 41.6 |
| AlCe6 | 5 | 11.4 | 11.0 |
| AlCe6 | 10 | 7.5 | 41.6 |
| AlCe6 | 31 | 0.0 | 100.0 |
| SnCe6 | 5 | 8.6 | 33.1 |
| SnCe6 | 10 | 7.1 | 44.8 |
| SnCe6 | 31 | 0.5 | 96.1 |
| PdCe6 | 5 | 6.2 | 49.3 |
| PdCe6 | 10 | 2.8 | 76.9 |
| PdCe6 | 31 | 0 | 100.0 |

| | | | |
|---|---|---|---|
| Notes on above table: ¹Treatments were amended into Potato Dextrose Agar (PDA) ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

Tables 16A and 16B show that various metallated chlorophyllins of type II inhibited dollar spot fungus in the presence of light.

### Example 17 - Comparative Example

In this example, control of dollar spot fungus *(Sclerotinia homoeocarpa)* with a cobalt chlorins (which is not a Type II photosensitizer) was assessed. Treatments were amended into Potato Dextrose Agar (PDA) at desired concentrations. Then, a 5mm diameter plug of a *Sclerotinia homoeocarpa* isolate (3 isolates total tested) was inoculated into the center of the amended Petri-dish and incubated at 21°C in the dark for 24 hours. After 24 hours, one set of Petri-dishes (in triplicate) is left in the dark and one set is placed under illumination for the remainder of the experiment (all at 21°C). Radial growth of the fungus is monitored daily until the growth of *S. homoeocarpa* on non-amended PDA reaches the edge of the Petri-dish. Illumination is provided by fluorescent lights emitting about 180 µmol/m²/s photosynthetically active radiation (PAR).

**Table 17A: Results in dark**

| **Treatment¹** | **Rate (µM)** | **Mean Radial Growth (mm)^{2,3}** | **% Inhibition⁵** |
|---|---|---|---|
| Non-amended (control) | 0 | 13.6 | - |
| CoCe6 | 10 | 13.3 | 2.05 |
| CoCe6 | 31 | 12.9 | 4.92 |

**Table 17B: Results on inhibition in light**

| **Treatment¹** | **Rate (µM)** | **Mean Radial Growth (mm)^{2,3}** | **% Inhibition⁵** |
|---|---|---|---|
| Non-amended (control) | 0 | 12.8 | - |
| CoCe6 | 10 | 12.4 | 3.0 |
| CoCe6 | 31 | 12.3 | 3.9 |

| | | | |
|---|---|---|---|
| Notes on above tables: ¹Treatments were amended into Potato Dextrose Agar (PDA) ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

In this example, control of dollar spot fungus (*Sclerotinia homoeocarpa*) with Cu chlorophyllin was assessed. Treatments were amended into Potato Dextrose Agar (PDA) at desired concentrations. Then, a 5mm diameter plug of a *Sclerotinia homoeocarpa* isolate (5 isolates total tested) was inoculated into the center of the amended Petri-dish and incubated at 21°C in the dark for 24 hours. After 24 hours, one set of Petri-dishes (in triplicate) is left in the dark and one set is placed under illumination for the remainder of the experiment (all at 21°C). Radial growth of the fungus is monitored daily until the growth of *S. homoeocarpa* on non-amended PDA reaches the edge of the Petri-dish. Illumination is provided by fluorescent lights emitting about 180 µmol/m²/s photosynthetically active radiation (PAR).

**Table 17C: Results in dark**

| **Treatment¹** | **Rate (µM)** | **Mean Radial Growth (mm)^{2,3}** | **% Inhibition⁵** |
|---|---|---|---|
| Non-amended (control) | 0 | 13.87 | - |
| Cu Chlorophyllin (CuChln) | 31.62 | 14.30 | -3.13 |
| CuChln | 100 | 14.33 | -3.37 |
| CuChln | 316.2 | 14.60 | -5.29 |
| CuChln | 1000 | 14.40 | -3.85 |

**Table 17D: Results on inhibition in light**

| **Treatment¹** | **Rate (µM)** | **Mean Radial Growth (mm)^{2,3}** | **% Inhibition⁵** |
|---|---|---|---|
| Non-amended (control) | 0 | 11.80 | - |
| Cu Chlorophyllin (CuChln) | 31.62 | 14.03 | -18.93 |
| CuChln | 100 | 14.20 | -20.34 |
| CuChln | 316.2 | 14.93 | -26.55 |
| CuChln | 1000 | 15.20 | -28.81 |

| | | | |
|---|---|---|---|
| Notes on above table: ¹Treatments were amended into Potato Dextrose Agar (PDA) ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

Tables 17A-17D show that metallated chlorophyllins that are not type II photosensitizers - or in other words, metallated chlorophyllins that do not generate singlet oxygens in the presence of light - do not inhibit dollar spot fungus whether in the presence or absence of light.

### Example 18

In this example, control of dollar spot fungus *(Sclerotinia homoeocarpa)* with chlorins combined with a chelating agent was assessed. Treatments were prepared in Phosphate Buffered Saline (PBS) in 24 well plates (in duplicates for light vs. dark incubation) at desired concentrations. Then, a 5mm diameter plug of *a Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of S. *homoeocarpa* reaches the edge of the Petri-dish. Illumination is provided by LED lights emitting about 1000 µmol/m²/s photosynthetically active radiation (PAR).

**Table 18A: Results in dark**

| **Treatment¹** | **Rate (µM)** | **Mean Radial Growth (mm)^{2,3}** | **% Inhibition⁵** |
|---|---|---|---|
| PBS (control) | 0 | 11.17 | - |
| EDTA, disodium, dihydrate (NaEDTA) | 500 | 6.72 | 39.80 |
| Mg chlorophyllin (Mg Chin) | 100 | 12.50 | -11.94 |
| Mg ChIn | 10 | 11.61 | -3.98 |
| Ce6 | 100 | 10.78 | 3.48 |
| Ce6 | 10 | 11.33 | -1.49 |
| NaEDTA + MgChln | 500+100 | 8.06 | 27.86 |
| NaEDTA + MgChln | 500+10 | 8.17 | 26.87 |
| NaEDTA + Ce6 | 500+100 | 7.17 | 35.82 |
| NaEDTA + Ce6 | 500+10 | 5.44 | 51.24 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table 18B: Results on inhibition in light**

| **Treatment¹** | **Rate (µM)** | **Mean Radial Growth (mm)^{2,3}** | **% Inhibition⁵** |
|---|---|---|---|
| PBS (control) | 0 | 11.06 | - |
| EDTA, disodium, dihydrate (NaEDTA) | 500 | 9.22 | 16.58 |
| Mg chlorophyllin (Mg Chin) | 100 | 8.56 | 22.61 |
| Mg ChIn | 10 | 7.56 | 31.66 |
| Ce6 | 100 | 9.83 | 11.06 |
| Ce6 | 10 | 8.39 | 24.12 |
| NaEDTA + MgChln | 500+100 | 2.50 | 77.39 |
| NaEDTA + MgChln | 500+10 | 1.06 | 90.45 |
| NaEDTA + Ce6 | 500+100 | 2.61 | 76.38 |
| NaEDTA + Ce6 | 500+10 | 0.94 | 91.46 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

### Example 19

In this example, control of dollar spot fungus *(Sclerotinia homoeocarpa)* with Zinc Protoporphyrin IX (Zn-PPIX) combined with EDTA was assessed. Treatments were prepared in Phosphate Buffered Saline (PBS) in 24 well plates (in duplicates for light vs. dark incubation) at desired concentrations. Then, a 5mm diameter plug of a *Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S. homoeocarpa* reaches the edge of the Petri-dish. Illumination is provided by LED lights emitting about 1000 µmol/m²/s photosynthetically active radiation (PAR).

**Table 19A: Results on inhibition in light**

| **Treatment¹** | **Rate (µM)** | **Mean Radial Growth (mm)^{2,3}** | **% Inhibition⁵** |
|---|---|---|---|
| PBS (control) | 0 | 11.11 | - |
| EDTA, disodium, dihydrate (NaEDTA) | 500 | 7.11 | 36.00 |
| Zn Protoporphyrin IX (PPIX) | 10 | 10.28 | 7.50 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

### Example 20

In this example, control of dollar spot fungus (*Sclerotinia homoeocarpa*) with bacteriochlorin combined with EDTA was assessed. Treatments were prepared in Phosphate Buffered Saline (PBS) in 24 well plates (in duplicates for light vs. dark incubation) at desired concentrations. Then, a 5mm diameter plug of *a Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S*. *homoeocarpa* reaches the edge of the Petri-dish. Illumination is provided by LED lights emitting about 1000 µmol/m²/s photosynthetically active radiation (PAR).

**Table 20A: Results in dark**

| **Treatment¹** | **Rate (µM)** | **Mean Radial Growth (mm)^{2,3}** | **% Inhibition⁵** |
|---|---|---|---|
| PBS (control) | 0 | 10.67 | - |
| Bacteriochlorin (BchlNA) (in Pluronics + Arlasolve) | 1 | 10.94 | -2.60 |
| BchlNa (in Pluronics + Arlasolve) | 10 | 11.39 | -6.77 |
| NaEDTA + BchlNa | 500+1 | 6.78 | 36.46 |
| NaEDTA + BchlNa | 500+10 | 5.06 | 52.60 |
| NaEDTA | 500 | 7.17 | 32.81 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table 20B: Results on inhibition in light**

| **Treatment¹** | **Rate** (**µM**) | **Mean Radial Growth (mm)^{2,3}** | **% Inhibition⁵** |
|---|---|---|---|
| PBS (control) | 0 | 10.78 | - |
| Bacteriochlorin (BchlNA) (in Pluronics + Arlasolve) | 1 | 10.44 | 3.09 |
| BchINa (in Pluronics + Arlasolve) | 10 | 8.33 | 22.68 |
| NaEDTA + BchlNa | 500+1 | 4.72 | 56.19 |
| NaEDTA + BchlNa | 500+10 | 0.67 | 93.81 |
| NaEDTA | 500 | 7.17 | 33.51 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

### Example 21

In this example, control of dollar spot fungus (*Sclerotinia homoeocarpa*) with Aluminum chlorin e6 combined with EDTA was assessed. Treatments were prepared in Phosphate Buffered Saline (PBS) in 24 well plates (in duplicates for light vs. dark incubation) at desired concentrations. Then, a 5mm diameter plug of *a Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S*. *homoeocarpa* reaches the edge of the Petri-dish. Illumination is provided by LED lights emitting about 1000 µmol/m²/s photosynthetically active radiation (PAR).

**Table 21A: Results in dark**

| **Treatment¹** | **Rate** (**µM)** | **Mean Radial Growth (mm)^{2,3}** | **% Inhibition⁵** |
|---|---|---|---|
| PBS (control) | 0 | 12.5 | - |
| Al Ce6 | 1 | 13 | -4 |
| Al Ce6 | 10 | 13.17 | -5.33 |
| EDTA disodium, dihydrate (NaEDTA) | 500 | 11.06 | 11.56 |
| NaEDTA + Al Ce6 | 500+1 | 11.78 | 5.78 |
| NaEDTA + Al Ce6 | 500+10 | 9.39 | 24.89 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table 21B: Results on inhibition in light**

| **Treatment¹** | **Rate** (**µM**) | **Mean Radial Growth (mm)^{2,3}** | **% Inhibition⁵** |
|---|---|---|---|
| PBS (control) | 0 | 12.72 | - |
| Al Ce6 | 1 | 13 | -2.18 |
| Al Ce6 | 10 | 4.78 | 62.45 |
| EDTA disodium, dihydrate (NaEDTA) | 500 | 10.78 | 15.28 |
| NaEDTA + Al Ce6 | 500+1 | 6.39 | 49.78 |
| NaEDTA + Al Ce6 | 500+10 | 3 | 76.42 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

### Example 22

In this example, control of dollar spot fungus (*Sclerotinia homoeocarpa*) with hematoporphyrin IX dichloride combined with a chelating agent (EDTA disodium, dihydrate) was assessed. Treatments were prepared in Phosphate Buffered Saline (PBS) in 24 well plates (in duplicates for light vs. dark incubation) at desired concentrations. Then, a 5mm diameter plug of a *Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S*. *homoeocarpa* reaches the edge of the Petri-dish. Illumination is provided by LED lights emitting about 1000 µmol/m²/s photosynthetically active radiation (PAR).

**Table 22A: Results in dark**

| **Treatment¹** | **Rate** (**µM)** | **Mean Radial Growth (mm)^{2,3}** | **% Inhibition⁵** |
|---|---|---|---|
| PBS | 0 | 14.28 | - |
| Hematoporphyrin IX dichloride (HemIX) | 10 | 15.06 | -5.45 |
| EDTA disodium, dihydrate (NaEDTA) | 500 | 14.83 | -3.89 |
| HemIX + NaEDTA | 10+500 | 14.78 | -3.50 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 48 and 72 hours of incubation at 21°C ⁵% Inhibition calculated relative to non-amended control | | | |

**Table 22B: Results on inhibition in light**

| **Treatment¹** | **Rate** (**µM**) | **Mean Radial Growth (mm)^{2,3}** | **% Inhibition⁵** |
|---|---|---|---|
| PBS | 0 | 13.72 | - |
| Hematoporphyrin IX dichloride (HemIX) | 10 | 8.39 | 38.87 |
| EDTA disodium, dihydrate (NaEDTA) | 500 | 8.89 | 35.22 |
| HemIX + NaEDTA | 10+500 | 0.56 | 95.95 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 48 and 72 hours of incubation at 21°C ⁵% Inhibition calculated relative to non-amended control | | | |

### Example 23 - Test on host plant Nicotiana benthamiana

In this example, control of the fungal plant pathogen *Colletotrichum orbiculare* (Cgm) on the host plant *Nicotiana benthamiana* following treatment with Mg Chlorophyllin combined with a chelating agent and an emulsifier was assessed. Treatments were applied to *N. benthamiana* plants approximately 2 hours prior to inoculation with a spore suspension of Cgm. Plants were then exposed to light for a 24 hour period followed by dark incubation until disease symptoms were evident on the water treated control plants. Once disease symptoms were evident, lesions were counted and leaf area measured in order to determine the number of lesions/cm² leaf area. Four replicate plants were used per treatment and plants were randomized under the light source. Illumination is provided by LED lights emitting about 180 µmol/m²/s photosynthetically active radiation (PAR).

**Table 23: Results on inhibition in light**

| **Treatment¹** | **Lesions/cm² Leaf Area²** | **% Inhibition³** | **Phytotoxicity⁴** |
|---|---|---|---|
| 0.1% Mg Chlorophyllin + 0.025% Ca EDTA, disodium + 0.0175% Atlox AL-3273 | 0.146 | 97.21 | 0 |
| 0.025% Ca EDTA, disodium + 0.0175% Atlox AL-3273 | 1.857 | 64.35 | 0 |
| water control | 5.210 | - | 0 |

| | | | |
|---|---|---|---|
| ¹Treatments were applied ~2 hours prior to inoculation with Cgm. ²Numbers are means of 4 replications. ³% Inhibition calculated relative to non-amended control ⁴Phytotoxicity ratings: 0=healthy plant, no damage; 3=slight damage; 7=severe damage; 10=dead plant. Less than 3 is considered acceptable | | | |

### Example 24 (no aminopolycarboxylic acid) - not according to the invention

In this example, control of the fungal plant pathogen *Colletotrichum orbiculare* (Cgm) on the host plant *Nicotiana benthamiana* following treatment with Ce6 trisodium salt (Ce6Na3) combined with a polyalphaolefin (PAO) oil was assessed. Treatments were applied to *N. benthamiana* plants approximately 2 hours prior to inoculation with a spore suspension of Cgm. Plants were then exposed to light for a 24 hour period followed by dark incubation until disease symptoms were evident on the water treated control plants. Once disease symptoms were evident, lesions were counted and leaf area measured in order to determine the number of lesions/cm² leaf area. Four replicate plants were used per treatment and plants were randomized under the light source. Illumination is provided by LED lights emitting about 180 µmol/m²/s photosynthetically active radiation (PAR).

**Table 24: Results on inhibition in light**

| **Treatment¹** | **Lesions/cm² Leaf Area²** | **% Inhibition⁴** | **Phytotoxicity⁵** |
|---|---|---|---|
| 0.1% Ce6Na3 + 0.25% PAO 4 Cst (contains 7% Atlox AL-3273) | 0.64 | 97.21 | 2 |
| 0.25% PAO 4 Cst (contains 7% Atlox AL-3273) | 2.06 | 64.35 | 0 |
| water control | 3.59 | - | 0 |

| | | | |
|---|---|---|---|
| ¹Treatments were applied ~2 hours prior to inoculation with Cgm. ²Numbers are means of 4 replications. ³Lesions/cm² Leaf Area followed by a letter in common are not statistically different (p=0.05) ⁴% Inhibition calculated relative to non-amended control. ^{5.} Phytotoxicity ratings: 0=healthy plant, no damage; 3=slight damage; 7=severe damage; 10=dead plant. Less than 3 is considered acceptable | | | |

### Example 25 (no aminopolycarboxylic acid) - not according to the invention

In this example, control of dollar spot fungus *(Sclerotinia homoeocarpa)* with Mg Chlorophyllins combined with a chelating agent (Tannic acid) was assessed. Treatments were prepared in Phosphate Buffered Saline (PBS) in 24 well plates (in duplicates for light vs. dark incubation) at desired concentrations. Then, a 5mm diameter plug of a *Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S*. *homoeocarpa* reaches the edge of the Petri-dish. Illumination is provided by LED lights emitting about 1000 µmol/m²/s photosynthetically active radiation (PAR).

**Table 25A: Results in dark**

| **Treatment¹** | **Rate (µM)** | **Mean Radial Growth (mm)^{2,3}** | **% Inhibition⁵** |
|---|---|---|---|
| PBS | 0 | 10.67 | - |
| Tannic acid-500 | 500 | 11.33 | -6.25 |
| Tannic acid-1500 | 1500 | 9.89 | 7.29 |
| Mg Chl-5 | 5 | 10.56 | 1.04 |
| MgChl+Tannic Acid-5+500 | 5+500 | 11.50 | -7.81 |
| MgChl+Tan nic Acid-5+1500 | 5+1500 | 9.50 | 10.94 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table25B: Results on inhibition in light**

| **Treatment¹** | **Rate (µM)** | **Mean Radial Growth (mm)^{2,3}** | **% Inhibition⁵** |
|---|---|---|---|
| PBS | 0 | 10.89 | - |
| Tannic acid-500 | 500 | 11.94 | -9.69 |
| Tannic acid-1500 | 1500 | 9.11 | 16.33 |
| Mg Chl-5 | 5 | 6.78 | 37.76 |
| MgChl+Tannic Acid-5+500 | 5+500 | 6.39 | 41.33 |
| MgChl+Tannic Acid-5+1500 | 5+1500 | 2.50 | 77.04 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

Combining MgChIn with Tannic acid provided greater inhibition on fungal growth than using MgChln or Tannic acid alone.

### Example 26

In this example, application of a porphyrin photosensitizer compound and chelating agents suppressed growth of Bacteria (*Erwinia amylovora*) that causes Fire Blight disease using photodynamic inhibition. In particular, Mg-chlorophyllin and disodium EDTA and Baypure DS100 were used and their combination was shown to inactivate *E*. *amylovora* growth. In the experiment, E. *amylovora* were grown in liquid medium. Samples were incubated for 30 min with 100 µM of Mg-Chlorophyllin with or without Chelators, and then illuminated with 395 nm (fluence 26.6 J cm⁻²) for 30 mins. CFU of the bacteria was counted on the plates. The following table summarizes the results:

**Table 26: Results on relative inactivation of bacteria after PDI treatment**

| **Treatment** | **Relative inactivation [CFU_{Co -/-} / CFUₛₐₘₚₗₑ]** | **Log Relative inactivation [CFU_{Co -/-} / CFUₛₐₘₚₗₑ]** |
|---|---|---|
| Untreated control, without light | 1 | 0 |
| no light, 100 µM Chlorophyllin+ 1.2 % BaypureDS100 | 8.30E+00 | 0.919078 |
| With light, 100 µM Chlorophyllin+1.2 % BaypureDS100 | 1.40E+07 | 7.146128 |
| no light, 100 µM Chlorophyllin+ 1.2 % | 5.30E+04 | 4.724276 |
| BaypureDS100, 1 mM Na2EDTA | | |
| With light, 100 µM Chlorophyllin+ 1.2 % BaypureDS100, 1 mM Na2EDTA | > 1.6E+08 | >8 |

Combining EDTA and Baypure DS100 with chlorophyllin increased the antibacterial effect significantly. *E. amylovora* was almost completely inactivated with the combination of the three compounds under the test conditions.

### Example 27

In this example, application of a porphyrin photosensitizer compound and a chelating agent suppressed growth of *Botrytis cinerea* fungi that causes Gray Mold disease using photodynamic inhibition. In particular, Mg-chlorophyllin and sodium polyaspartate (Baypure^{®} DS 100) were used, and the combination of the porphyrin photosensitizer compound and each chelating agent was shown to inactivate *Botrytis cinerea* growth.

In the experiments, *Botrytis cinerea* mycelia were grown in liquid medium for 48 hours. Small spheres of the mycelia (average diameter 2 mm) were incubated for 100 minutes with Mg-Chlorophyllin with or without Baypure DS100 Samples were illuminated with 395 nm (fluence 106.6 J cm⁻²) for 120 min and the radial growth of mycelial patches after 7 days on agar medium was measured. A sample was considered dead, if there was no growth observable after 7 days on agar plates. The following table summarizes the results:

**Table 27: Results on percentage of dead B. cinereal mycelia**

| **Treatment** | **Percentage of dead samples [%]** |
|---|---|
| Untreated control in dark | 0 |
| BaypureDS100 1.2%, without light | 0 |
| BaypureDS100 1.2%, with light | 0 |
| MgChIn 100 µM, with light | 0 |
| MgChIn 100 µM, and 1.2% BaypureDS100, with light | 44.4 |

The phototreatment of chlorophyllin or Baypure alone had no effect on fungal mycelia. Adding Baypure DS100 into Chlorophyllin increased the suppression on the growth of fungal mycelia, notably at Chlorophyllin concentrations of 100 µM at the test conditions. *Botrytis cinerea* was greatly inactivated when treated by combination of 100 µM Chlorophyllin and 1.2% Baypure DS100.

### Example 28 - test on apple trees

In this example, a porphyrin photosensitizer compound and a chelating agent were applied in the field to suppress growth of Bacteria (*Erwinia Amylovora*) that causes Fire Blight disease on apple trees (Gala). In particular, Mg-chlorophyllin and disodium EDTA with and without Baypure100DS were used and their combination was shown to suppress the apple fire blight in the field condition. No phytotoxicity from the treatments were observed on the apple trees.

*Erwinia Amylovora* was inoculated at the 80% of bloom of the apple trees. Mg-chlorophyllin and the chelator combinations were applied three times (2hrs before inoculation, and 24hrs, 72hrs after inoculation) at the spray volume of 300 gal per acre. Fire Blight (Blossom blight) disease infections were rated several weeks after inoculation. The average disease infection (%) is shown in table below.

**Table 28**

| Treatments | Disease infection, % | Percent of control, % | Phytotoxicity ¹ |
|---|---|---|---|
| Untreated control | 37.1 | 0% | 0 |
| 0.2%MgChln + 0.1%NaEDTA+0.05% Atlox AL-3273 + 0.05% Saponin | 11.4 | 69% | 0 |
| 0.2%MgChin+1.2%Baypure+0.0 5%NaEDTA+0.05% Atlox AL-3273 + 0.05% Saponin | 15.3 | 59% | 0 |

| | | | |
|---|---|---|---|
| ^{1.} Phytotoxicity ratings: 0=healthy plant, no damage; 3=slight damage; 7=severe damage; 10=dead plant. Less than 3 is considered acceptable | | | |

### Example 29 - test on tomato plants

In this example, application of a porphyrin photosensitizer compound and a chelating agent suppressed growth of fungal pathogen *Alternaria solani* that cause *Early blight* on Tomato plants . In particular, Mg-chlorophyllin and disodium EDTA with and without Baypure100DS were used and their combination was shown to suppress *Early blight* on tomato in the field condition. No phytotoxicity from the treatments were observed on the tomato plants.

*Alternaria solani* was inoculated twice on the tomato plants at 35 days and 42 days after transplanting. Mg-chlorophyllin and the chelator combinations were applied total 6 times (2hrs before 1^{st} inoculation, 24hrs after 1^{st} inoculation, followed by 3 more application at 7 days intervals) at the spray volume of 50 gal per acre. Early blight disease infections were rated 11 days after 2^{nd} inoculation. The average disease infection (%) and the standard area under the disease progress curve (SAUDPC) are shown in the table below.

**Table 29**

| **Treatments** | **Disease severity, %** | **SAUDPC** | **Percent of control, %** | **Phytotoxicity ¹** |
|---|---|---|---|---|
| Untreated control | 0.93 | 0.350 | 0 | 0 |
| 0.2%MgChIn+0.1%NaEDTA+ 0.05% Atlox AL-3273 + 0.05% Saponin | 0.84 | 0.219 | 39.6% | 0 |
| 0.2%MgChin+1.2%Baypure+ 0.05%NaEDTA+ 0.05% Atlox AL-3273 + 0.05% Saponin | 0.59 | 0.128 | 63.4% | 0 |

| | | | | |
|---|---|---|---|---|
| ^{1.} Phytotoxicity ratings: 0=healthy plant, no damage; 3=slight damage; 7=severe damage; 10=dead plant. Less than 3 is considered acceptable | | | | |

### Example 30 - test on strawberry plants

To evaluate the phytotoxicity of photosensitizers with chelators on plants, MgChln and Na2EDTA combination was applied on strawberry plants (*Fragaria vesa*) to test whether the treatment cause leaf damage.

Treatments were sprayed onto seed strawberry plants derived from seeds and grown outside under a transparent rain cover. Total three applications were made in 7-day interval. Phytotoxiciy on the plants were assessed on day 0 and day 21. No leaf damage was observed.

**Table 30**

| **Treatments** | **Phytotoxicity Day 0** | **Phytotoxicity ¹ Day 21** |
|---|---|---|
| Untreated control | 0 | 0 |
| Water alone | 0 | 0 |
| 100 µM MgChln+5mM Na₂EDTA | 0 | 0 |

| | | |
|---|---|---|
| ^{1.} Phytotoxicity ratings: 0=healthy plant, no damage; 3=slight damage; 7=severe damage; 10=dead plant. Less than 3 is considered acceptable | | |

### Example 31

In this example, control of dollar spot fungus *(Sclerotinia homoeocarpa*) with meso-Tetra (N-methyl-4-pyridyl) porphine tetra tosylate (cationic porphyrin) combined with a chelating agent (EDTA, disodium, dihydrate) was assessed. Treatments were prepared in Phosphate Buffered Saline (PBS) in 24 well plates (in duplicates for light vs. dark incubation) at desired concentrations. Then, a 5mm diameter plug of a *Sclerotinia homoeocarpa* isolate (3 isolates total tested) was inoculated into the PBS and incubated at 21°C in the dark for 2 hours. After 2 hours, one of the 24 well plates (with isolates in triplicate) is left in the dark and one 24 well plate is placed under illumination for 1 hour (all at 21°C). Following illumination, fungal plugs are removed from PBS, blotted dry on sterile filter paper and transferred to non-amended Potato Dextrose Agar (PDA). Radial growth of the fungus is monitored daily until the growth of *S*. *homoeocarpa* reaches the edge of the Petri-dish. Illumination is provided by LED lights emitting about 1000 µmol/m²/s photosynthetically active radiation (PAR).

**Table 31A: Results in dark**

| **Treatment¹** | **Rate** (**µM)** | **Mean Radial Growth (mm)^{2,3}** | **% Inhibition⁵** |
|---|---|---|---|
| PBS | 0 | 14.67 | - |
| EDTA, disodium, dihydrate (NaEDTA) | 500 | 12.67 | 13.64 |
| meso-Tetra (N-methyl-4-pyridyl) porphine tetra tosylate | 0.1 | 14.06 | 4.17 |
| meso-Tetra (N-methyl-4-pyridyl) porphine tetra tosylate + NaEDTA | 0.1+500 | 13.61 | 7.20 |

| | | | |
|---|---|---|---|
| Notes on above table: ¹ Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

**Table 31B: Results on inhibition in light**

| **Treatment¹** | **Rate** (**µM)** | **Mean Radial Growth (mm)^{2,3}** | **% Inhibition⁵** |
|---|---|---|---|
| PBS | 0 | 12.83 | - |
| EDTA, disodium, dihydrate (NaEDTA) | 500 | 8.17 | 36.36 |
| meso-Tetra (N-methyl-4-pyridyl) porphine tetra tosylate | 0.1 | 8.39 | 34.63 |
| meso-Tetra (N-methyl-4-pyridyl) porphine tetra tosylate + NaEDTA | 0.1+500 | 2.89 | 77.49 |

| | | | |
|---|---|---|---|
| Notes on above table: ¹Treatments were prepared in Phosphate Buffered Saline (PBS), incubated on shaker (200 rpm) for 2 hours in the dark, then exposed to light (Helios, 1000 PAR) or dark for 1 hour. ²Means were calculated based on 3 fungal isolates replicated 3 times, with 2 measurements per replicate (18 total measurements) ³Means represent growth that occurred between 24 and 48 hours of incubation at 21°C ⁵% Inhibition calculated relative to non-amended control | | | |

### Example 32

In this example, control of the fungal plant pathogen *Colletotrichum orbiculare* (Cgm) on the host plant *Nicotiana benthamiana* following treatment with Mg Chlorophyllin combined with a chelating agent was assessed. Treatments were applied to *N. benthamiana* plants approximately 2 hours prior to inoculation with a spore suspension of Cgm. Plants were then exposed to light for a 12 hour period followed by dark incubation until disease symptoms were evident on the water treated control plants. Once disease symptoms were evident, lesions were counted and leaf area measured in order to determine the number of lesions/cm² leaf area. Four replicate plants were used per treatment and plants were randomized under the light source. Illumination is provided by LED lights emitting about 180 µmol/m²/s photosynthetically active radiation (PAR).

**Table 32**

| **Treatment¹** | **Lesions/cm² Leaf Area²** | **% Inhibition⁴** | **Phytotoxicity 5** |
|---|---|---|---|
| 0.01% Mg Chlorophyllin + 0.0175% Atlox AL-3273 | 4.60 | 52.3 | 0 |
| 0.05% Na2EDTA + 0.0175% Atlox AL-3273 | 6.90 | 28.5 | 0 |
| 0.01% Mg Chlorophyllin + 0.05% Na2EDTA, + 0.0175% Atlox AL-3273 | 0.56 | 94.2 | 0 |
| water control | 9.64 | - | 0 |

| | | | |
|---|---|---|---|
| ¹Treatments were applied ~2 hours prior to inoculation with Cgm. ²Numbers are means of 4 replications. ⁴% Inhibition calculated relative to non-amended control. ^{5.} Phytotoxicity ratings: 0=healthy plant, no damage; 3=slight damage; 7=severe damage; 10=dead plant. Less than 3 is considered acceptable | | | |

### Additional information on experimentation

The protocols for the photodynamic inhibition (PDI) of *A. solani* and B. *cinerea* differ in the way the spheres of mycelia were grown. The PDI treatment itself and evaluation are performed in the same manner.

The protocol for the PDI of *A. solani* was as follows (for Experiment 2 and 5):
- Grow *A. solani* on tomato-agar for some days.
- Transfer parts of the growing mycelium form the edge of the *A. solani* (no conidia) to liquid tomato medium.
- Incubate overnight at 26°C under constant agitation.
- Transfer the grown mycelia (spheres of mycelia, approximately 2 mm in diameter) to 24 well plates.
- Add 500 microlitres of the PS to the well (PBS for the Co and light only controls).
- Incubate under agitation for 100 minutes.
- Illuminate under agitation for 120 minutes.
- Transfer the treated mycelia to tomato-agar plates and incubate for one week at room temperature.
- Evaluate by counting of dead samples.

The protocol for the PDI of *B*. *cinerea* was as follows (for experiments 3 and 4 described above):
- Grow *B*. *cinerea* on malt-peptone-agar for some days.
- Transfer spores of B. cinerea to liquid malt-peptone medium.
- Incubate for 2-3 days at 26°C under constant agitation.
- Transfer the grown mycelia (spheres of mycelia, approximately 2 mm diameter) to 24well plates.
- Add 500µl of the PS to the well.
- Incubate under agitation for 100 minutes in the dark.
- Illuminate under agitation for 120 minutes.
- Transfer the treated mycelia to malt-peptone-agar plates and incubate for one week at room temperature.
- Evaluate by counting of dead samples.

Regarding the *E*. *Coli* assay tests in the above examples, the following procedure was used:
1.E. Coli K-12 inoculated in 5 mL TSB and placed in a shaking incubator overnight.
2.Dilute culture in 500 mL PBS (~10^8 CFU/mL) and placed in shaking incubator for 30 minutes at 37 °C.
3.15 mL samples created using 12 mL culture and a mixture of PBS buffer and sample compounds.
4.Placed under LED lamps for 2 hours (40 W/m²).
5.Samples diluted to 10⁻⁴ and culture controls diluted to 10⁻⁵ for plating through series dilutions.
6.0.1 mL plated of each sample in triplicates on TSA base (10⁻³ and 10⁻⁴ for samples. 10⁻⁴ and 10⁻⁵ for controls).
7.Incubated overnight at 37 °C.
8.Colonies counted next morning and recorded.

## Claims

1. A method for inhibiting growth of a microbial pathogen of a plant, comprising:
applying to the plant a combination comprising:
a nitrogen-bearing macrocyclic compound which is a singlet oxygen photosensitizer selected from the group consisting of a porphyrin, a reduced porphyrin and a mixture thereof; and
a chelating agent to increase permeability of the microbial pathogen to the nitrogen-bearing macrocyclic compound, wherein the chelating agent comprises an aminopolycarboxylic acid or an agriculturally acceptable salt thereof; and
exposing the plant to light to activate the nitrogen-bearing macrocyclic compound and generate reactive singlet oxygen species.

2. The method of claim 1, wherein the reduced porphyrin is selected from the group consisting of a chlorin, a bacteriochlorin, an isobacteriochlorin, a corrin, a corphin and a mixture thereof.

3. The method of claim 2, wherein the reduced porphyrin is chlorophyllin.

4. The method of any one of claims 1 to 3, wherein the nitrogen-bearing macrocyclic compound is complexed with a metal to form a metallated nitrogen-bearing macrocyclic compound, the metal being selected such that, in response to light exposure, the metallated nitrogen-bearing compound generates reactive singlet oxygen species.

5. The method of claim 4, wherein the metal is selected from the group consisting of Mg, Zn, Pd, Al, Pt, Sn, Si and mixtures thereof.

6. The method of any one of claims 1 to 3, wherein the nitrogen-bearing macrocyclic compound is a metal-free nitrogen-bearing macrocyclic compound that is selected such that, in response to light exposure, the metal-free nitrogen-bearing compound generates reactive singlet oxygen species.

7. The method of any one of claim 1 to 6, wherein the aminopolycarboxylic acid is selected from the group consisting of ethylenediaminetetraacetic acid (EDTA) or an agriculturally acceptable salt thereof, ethylenediamine-N,N'-disuccinic acid (EDDS) or an agriculturally acceptable salt thereof, iminodisuccinic acid (IDS) or an agriculturally acceptable salt thereof, and mixtures thereof.

8. The method of any one of claims 1 to 7, wherein the combination further comprises an oil selected from the group consisting of a mineral oil, a vegetable oil and a mixture thereof.

9. The method of any one of claims 1 to 8, wherein the nitrogen-bearing macrocyclic compound and the chelating agent are applied simultaneously to the plant.

10. The method of any one of claims 1 to 8, wherein the nitrogen-bearing macrocyclic compound and the chelating agent are applied sequentially to the plant.

11. The method of any one of claims 1 to 10, wherein the combination is applied to the plant by at least one of soil drenching, pipetting, irrigating, spraying, misting, sprinkling, and pouring.

12. The method of any one of claims 1 to 11, wherein the microbial pathogen comprises a fungal pathogen or a bacterial pathogen.

13. The method of any one of claims 1 to 12, wherein the combination further comprises a surfactant.

14. Use of a composition for inhibiting growth of a microbial pathogen of a plant, the composition comprising:
a nitrogen-bearing macrocyclic compound which is a singlet oxygen photosensitizer selected from the group consisting of a porphyrin, a reduced porphyrin and a mixture thereof;
a chelating agent to increase permeability of the microbial pathogen to the nitrogen-bearing macrocyclic compound, wherein the chelating agent comprises an aminopolycarboxylic acid or an agriculturally acceptable salt thereof; and
a carrier fluid,
wherein upon applying the composition to the plant and exposing the plant to light, the nitrogen-bearing macrocyclic compound is activated and generates reactive singlet oxygen species.

15. The use of the composition of claim 14, wherein the nitrogen-bearing macrocyclic compound is chlorophyllin.

16. The use of the composition of claim 14 or 15, wherein the amino polycarboxylic acid is selected from the group consisting of ethylenediaminetetraacetic acid (EDTA) or an agriculturally acceptable salt thereof, ethylenediamine-N,N'-disuccinic acid (EDDS) or an agriculturally acceptable salt thereof, iminodisuccinic acid (IDS) or an agriculturally acceptable salt thereof, and mixtures thereof.

17. The use of the composition of any one of claims 14 to 16, wherein the composition further comprises a surfactant.

## Patentansprüche

1. Verfahren zum Inhibieren des Wachstums eines mikrobiellen Pathogens einer Pflanze, umfassend:
das Aufbringen einer Kombination, umfassend:
eine stickstoffhaltige makrocyclische Verbindung, bei der es sich um einen aus der aus einem Porphyrin, einem reduzierten Porphyrin und einer Mischung davon bestehenden Gruppe ausgewählten Singulett-Sauerstoff-Photosensibilisator handelt, und
einen Chelatbildner zum Erhöhen der Permeabilität des mikrobiellen Pathogens gegenüber der stickstoffhaltigen makrocyclischen Verbindung, wobei der Chelatbildner eine Aminopolycarbonsäure oder ein landwirtschaftlich unbedenkliches Salz davon umfasst, auf der Pflanze und
das Exponieren der Pflanze gegenüber Licht zum Aktivieren der stickstoffhaltigen makrocyclischen Verbindung und zum Erzeugen reaktiver Singulett-Sauerstoffspezies.

2. Verfahren nach Anspruch 1, wobei das reduzierte Porphyrin ausgewählt ist aus der Gruppe bestehend aus einem Chlorin, einem Bakteriochlorin, einem Isobakteriochlorin, einem Corrin, einem Corphin und einer Mischung.

3. Verfahren nach Anspruch 2, wobei es sich bei dem reduzierten Porphyrin um Chlorophyllin handelt.

4. Verfahren nach einem der Ansprüche 1 bis 3, wobei die stickstoffhaltige makrocyclische Verbindung unter Bildung einer metallierten stickstoffhaltigen makrocyclischen Verbindung mit einem Metall komplexiert wird, wobei das Metall so ausgewählt ist, dass die metallierte stickstoffhaltige Verbindung als Reaktion auf Lichtexposition reaktive Singulett-Sauerstoffspezies bildet.

5. Verfahren nach Anspruch 4, wobei das Metall aus der Gruppe bestehend aus Mg, Zn, Pd, Al, Pt, Sn, Si und Mischungen davon ausgewählt ist.

6. Verfahren nach einem der Ansprüche 1 bis 3, wobei es sich bei der stickstoffhaltigen makrocyclischen Verbindung um eine metallfreie stickstoffhaltige makrocyclische Verbindung handelt, die so ausgewählt ist, dass die metallfreie stickstoffhaltige makrocyclische Verbindung als Reaktion auf Lichtexposition reaktive Singulett-Sauerstoffspezies bildet.

7. Verfahren nach einem der Ansprüche 1 bis 6, wobei die Aminopolycarbonsäure ausgewählt ist aus der Gruppe bestehend aus Ethylendiamintetraessigsäure (EDTA) oder einem landwirtschaftlich unbedenklichen Salz davon, Ethylendiamin-N,N'-dibernsteinsäure (EDDS) oder einem landwirtschaftlich unbedenklichen Salz davon, Iminodibernsteinsäure (IDS) oder einem landwirtschaftlich unbedenklichen Salz davon und Mischungen davon.

8. Verfahren nach einem der Ansprüche 1 bis 7, wobei die Kombination weiterhin ein Öl umfasst, welches ausgewählt ist aus der Gruppe bestehend aus einem Mineralöl, einem Pflanzenöl und einer Mischung davon.

9. Verfahren nach einem der Ansprüche 1 bis 8, wobei die stickstoffhaltige makrocyclische Verbindung und der Chelatbildner gleichzeitig auf die Pflanze aufgebracht werden.

10. Verfahren nach einem der Ansprüche 1 bis 8, wobei die stickstoffhaltige makrocyclische Verbindung und der Chelatbildner aufeinanderfolgend auf die Pflanze aufgebracht werden.

11. Verfahren nach einem der Ansprüche 1 bis 10, wobei die Kombination auf die Pflanze aufgebracht wird durch zumindest eines der Verfahren: Tränken des Bodens, Pipettieren, Bewässern, Sprühen, Nebeln, Besprengen und/oder Gießen.

12. Verfahren nach einem der Ansprüche 1 bis 11, wobei das mikrobielle Pathogen ein pilzliches Pathogen oder ein bakterielles Pathogen umfasst.

13. Verfahren nach einem der Ansprüche 1 bis 12, wobei die Kombination weiterhin ein Tensid umfasst.

14. Verwendung einer Zusammensetzung zum Inhibieren des Wachstums eines mikrobiellen Pathogens einer Pflanze, wobei die Zusammensetzung Folgendes umfasst:
eine stickstoffhaltige makrocyclische Verbindung, bei der es sich um einen aus der aus einem Porphyrin, einem reduzierten Porphyrin und einer Mischung davon bestehenden Gruppe ausgewählten Singulett-Sauerstoff-Photosensibilisator handelt,
einen Chelatbildner zum Erhöhen der Permeabilität des mikrobiellen Pathogens gegenüber der stickstoffhaltigen makrocyclischen Verbindung, wobei der Chelatbildner eine Aminopolycarbonsäure oder ein landwirtschaftlich unbedenkliches Salz davon umfasst, und
eine Trägerflüssigkeit,
wobei beim Aufbringen der Zusammensetzung auf der Pflanze und dem Exponieren der Pflanze gegenüber Licht die stickstoffhaltige makrocyclische Verbindung aktiviert wird und reaktive Singulett-Sauerstoffspezies erzeugt.

15. Verwendung der Zusammensetzung nach Anspruch 14, wobei es sich bei der stickstoffhaltigen makrocyclischen Verbindung um Chlorophyllin handelt.

16. Verwendung der Zusammensetzung nach Anspruch 14 oder 15, wobei die Aminopolycarbonsäure ausgewählt ist aus der Gruppe bestehend aus Ethylendiamintetraessigsäure (EDTA) oder einem landwirtschaftlich unbedenklichen Salz davon, Ethylendiamin-N,N'-dibernsteinsäure (EDDS) oder einem landwirtschaftlich unbedenklichen Salz davon, Iminodibernsteinsäure (IDS) oder einem landwirtschaftlich unbedenklichen Salz davon und Mischungen davon.

17. Verwendung der Zusammensetzung nach einem der Ansprüche 14 bis 16, wobei die Kombination weiterhin ein Tensid umfasst.

## Revendications

1. Procédé pour l'inhibition de la croissance d'un pathogène microbien d'un végétal, comprenant :
l'application sur le végétal d'une combinaison comprenant :
un composé macrocyclique portant de l'azote qui est un agent photosensibilisant d'oxygène singulet choisi dans le groupe constitué par une porphyrine, une porphyrine réduite et un mélange correspondant ; et
un agent chélatant pour augmenter la perméabilité du pathogène microbien au composé macrocyclique portant de l'azote, l'agent chélatant comprenant un acide aminopolycarboxylique ou un sel acceptable sur le plan agricole correspondant ; et
l'exposition du végétal à de la lumière pour activer le composé macrocyclique portant de l'azote et générer une espèce d'oxygène singulet réactive.

2. Procédé selon la revendication 1, la porphyrine réduite étant choisie dans le groupe constitué par une chlorine, une bactériochlorine, une isobactériochlorine, une corrine, une corphine et un mélange correspondant.

3. Procédé selon la revendication 2, la porphyrine réduite étant une chlorophylline.

4. Procédé selon l'une quelconque des revendications 1 à 3, le composé macrocyclique portant de l'azote étant complexé par un métal pour former un composé macrocyclique portant de l'azote métallé, le métal étant choisi de sorte que, en réponse à une exposition à de la lumière, le composé portant de l'azote métallé génère une espèce d'oxygène singulet réactive.

5. Procédé selon la revendication 4, le métal étant choisi dans le groupe constitué par Mg, Zn, Pd, Al, Pt, Sn, Si et des mélanges correspondants.

6. Procédé selon l'une quelconque des revendications 1 à 3, le composé macrocyclique portant de l'azote étant un composé macrocyclique portant de l'azote sans métal qui est choisi de sorte que, en réponse à une exposition à de la lumière, le composé portant de l'azote sans métal génère une espèce d'oxygène singulet réactive.

7. Procédé selon l'une quelconque des revendications 1 à 6, l'acide aminopolycarboxylique étant choisi dans le groupe constitué par l'acide éthylènediaminetétraacétique (EDTA) ou un sel acceptable sur le plan agricole correspondant, l'acide éthylènediamine-N,N'-disuccinique (EDDS) ou un sel acceptable sur le plan agricole correspondant, l'acide iminodisuccinique (IDS) ou un sel acceptable sur le plan agricole correspondant, et des mélanges correspondants.

8. Procédé selon l'une quelconque des revendications 1 à 7, la combinaison comprenant en outre une huile choisie dans le groupe constitué par une huile minérale, une huile végétale et un mélange correspondant.

9. Procédé selon l'une quelconque des revendications 1 à 8, le composé macrocyclique portant de l'azote et l'agent chélatant étant appliqués simultanément sur le végétal.

10. Procédé selon l'une quelconque des revendications 1 à 8, le composé macrocyclique portant de l'azote et l'agent chélatant étant appliqués séquentiellement sur le végétal.

11. Procédé selon l'une quelconque des revendications 1 à 10, la combinaison étant appliquée sur le végétal par au moins l'un parmi le trempage du sol, le pipetage, l'irrigation, la pulvérisation, la brumisation, l'arrosage et le versement.

12. Procédé selon l'une quelconque des revendications 1 à 11, le pathogène microbien comprenant un pathogène fongique ou un pathogène bactérien.

13. Procédé selon l'une quelconque des revendications 1 à 12, la combinaison comprenant en outre un tensioactif.

14. Utilisation d'une composition pour l'inhibition de la croissance d'un pathogène microbien d'un végétal, la composition comprenant :
un composé macrocyclique portant de l'azote qui est un agent photosensibilisant d'oxygène singulet choisi dans le groupe constitué par une porphyrine, une porphyrine réduite et un mélange correspondant ;
un agent chélatant pour augmenter la perméabilité du pathogène microbien au composé macrocyclique portant de l'azote, l'agent chélatant comprenant un acide aminopolycarboxylique ou un sel acceptable sur le plan agricole correspondant ; et
un fluide porteur,
lors de l'application de la composition sur le végétal et l'exposition du végétal à de la lumière, le composé macrocyclique portant de l'azote étant activé et générant une espèce d'oxygène singulet réactive.

15. Utilisation de la composition selon la revendication 14, le composé macrocyclique portant de l'azote étant une chlorophylline.

16. Utilisation de la composition selon la revendication 14 ou 15, l'acide aminopolycarboxylique étant choisi dans le groupe constitué par l'acide éthylènediaminetétraacétique (EDTA) ou un sel acceptable sur le plan agricole correspondant, l'acide éthylènediamine-N,N'-disuccinique (EDDS) ou un sel acceptable sur le plan agricole correspondant, l'acide iminodisuccinique (IDS) ou un sel acceptable sur le plan agricole correspondant, et des mélanges correspondants.

17. Utilisation de la composition selon l'une quelconque des revendications 14 à 16, la composition comprenant en outre un tensioactif.
